(19) **Europäisches Patentamt / European Patent Office / Office européen des brevets**

(11) **EP 4 664 355 A1**

(12) # EUROPEAN PATENT APPLICATION
published in accordance with Art. 153(4) EPC

(43) Date of publication:
**17.12.2025 Bulletin 2025/51**

(21) Application number: **23921409.1**

(22) Date of filing: **08.02.2023**

(51) International Patent Classification (IPC):
**G06N 3/042** (2023.01)   **G06N 3/08** (2023.01)
**H04W 8/24** (2009.01)   **H04W 74/08** (2024.01)

(52) Cooperative Patent Classification (CPC):
**G06N 3/042; G06N 3/08; H04W 8/24; H04W 74/08**

(86) International application number:
**PCT/KR2023/001765**

(87) International publication number:
**WO 2024/167035 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
• **JUNG, Ikjoo**
  **Seoul 06772 (KR)**
• **LEE, Sangrim**
  **Seoul 06772 (KR)**
• **LEE, Taehyun**
  **Seoul 06772 (KR)**
• **KWON, Soonhee**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **APPARATUS AND METHOD FOR PERFORMING BACKGROUND KNOWLEDGE UPDATE ON BASIS OF SEMANTIC REPRESENTATION IN SEMANTIC COMMUNICATION**

(57)    According to various embodiments of the present disclosure, there is provided an operating method of a first node in a communication system. The method includes receiving one or more synchronization signals from a second node; receiving system information from the second node; transmitting a random access preamble to the second node; receiving a random access response from the second node; receiving a request for capability information of the first node from the second node; transmitting the capability information to the second node; receiving, from the second node, configuration information for constructing a relation between a background knowledge graph and a semantic representation vector based on the capability information, wherein the configuration information includes information about a second number that is a reference size of the background knowledge graph; and performing construction of the relation through connections of edges between the semantic representation vector and first node vectors in the background knowledge graph based on the configuration information and a first number of nodes by which the first node configures the background knowledge graph. The first node vectors include a selected few of second node vectors configuring the background knowledge graph.

EP 4 664 355 A1

【FIG. 22】

Device                         Base station

Application of power

Synchronization

UE Capability Enquiry

UE Capability Information
(Generatable, collectable, and processible raw data type, computation capability value of device, etc.)

OPT) When semantic communication is enabled to be performed

Indicator
DCI or MAC CE or RRC message

Storing received relation construction related information

- Background knowledge size reference M
- When number of background knowledge nodes < M
  > DDegree limit reference $\theta_M$
  > Maximum connection number limit $K_M$

- When number of background knowledge nodes ≥ M
  > Source function and top-L score selection related L
  > Maximum number of newly added semantic representation vectors srVectorMaxCnt
  > Maximum number of hops from <Node x, edge, node y> set H
  > Degree limit reference $\theta_L$
  > Maximum connection number limit $K_L$
- Edge weight normalization function

OPT) When receiving semantic representation vector

Constructing relation between Background knowledge graph and semantic representation vector

**Description**

[Technical Field]

The present disclosure relates to a communication system. Particularly, the present disclosure relates to an apparatus and a method for performing a background knowledge update based on a semantic representation in a semantic communication.

[Background Art]

In 6G communication, it is one of various goals to enable various new services for interconnecting people and machines with various levels of intelligence, so it is necessary to consider semantic problems instead of considering only existing technical problems. With respect to communication between people, word information is related to a corresponding "meaning" when exchanging information, and it can be seen that correct semantic communication occurs when a concept related to a message sent by a source is properly interpreted at a destination.

When a background knowledge is examined in an existing semantic communication study, it can be confirmed that there is no operation related to the background knowledge even though the background knowledge is displayed in a framework [1], and there is no content for updating a background knowledge held [2] (Reference Documents: [1] H. Xie, Z. Qin, G. Y. Li, B.-H. Juang, "Deep learning enabled semantic communication systems", IEEE Trans. Signal Proc., vol. 69, 2021 [2] Y. Xiao, Y. Li, G. Shi and H. V. Poor, "Reasoning on the Air: An Implicit Semantic Communication Architecture," 2022 IEEE International Conference on Communications Workshops (ICC Workshops), 2022, pp. 289-294).

Therefore, a semantic representation vector generated and delivered by satisfying alignment and uniformity on a unit hypersphere is regarded as a basic unit, and a procedure and signaling required for performing update through a relation configuration between the background knowledge and the delivered semantic representation vector are presented, so that it is necessary to specifically represent a series of protocols and definitions of operation processes for an inter-semantic layer operation.

The present disclosure proposes a protocol and a procedure of a semantic layer according to a related procedure for constructing a relation between a background knowledge and a semantic representation vector for a background knowledge update that satisfies two properties of alignment and uniformity on a unit hypersphere and previously holds a generated and delivered semantic representation vector, including an intention to be delivered in a system in which semantic communication can be performed.

[Disclosure]

[Technical Problem]

In order to solve the above-described problem, the present disclosure provides an apparatus and a method for performing a background knowledge update based on a semantic representation in a semantic communication.

The present disclosure provides an apparatus and a method for constructing a relation between a background knowledge and a semantic representation vector for a background knowledge update that satisfies two properties of alignment and uniformity on a unit hypersphere and previously holds a generated and delivered semantic representation vector, including an intention to be delivered in a system in which semantic communication can be performed.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided an operating method of a first node in a communication system comprising receiving one or more synchronization signals from a second node, receiving system information from the second node, transmitting a random access preamble to the second node, receiving a random access response from the second node, receiving a request for capability information of the first node from the second node, transmitting the capability information to the second node, receiving, from the second node, configuration information for constructing a relation between a background knowledge graph and a semantic representation vector based on the capability information, wherein the configuration information includes information about a second number that is a reference size of the background knowledge graph, and performing construction of the relation through connections of edges between the semantic representation vector and first node vectors in the background knowledge graph based on the configuration information and a first number of nodes by which the first node configures the background knowledge graph, wherein the first node vectors include a selected few of second node vectors configuring the background knowledge graph.

According to various embodiments of the present disclosure, there is provided an operating method of a second node in a communication system comprising transmitting one or more synchronization signals to a first node, transmitting system information to the first node, receiving a random access preamble from the first node, transmitting a random access response to the first node, transmitting a request for capability information of the first node to the second node, receiving the capability information from the first node, and transmitting, to the first node, configuration information for constructing a relation between the background knowledge graph and a semantic representation vector based on the capability information, wherein the configuration information includes information of a second number which is a reference size of a background knowledge graph, wherein the relation between the background knowledge graph and the semantic representation vector is constructed through connections of edges between the semantic representation vector and first node vectors in the background knowledge graph based on the configuration information and a first number of nodes that configure the background knowledge graph related to the first node, and wherein the first node vectors include a selected few of second node vectors configuring the background knowledge graph.

According to various embodiments of the present disclosure, there is provided a first node in a communication system, the first node comprising a transceiver and at least one processor. The at least one processor is configured to receive one or more synchronization signals from a second node, receive system information from the second node, transmit a random access preamble to the second node, receive a random access response from the second node, receive a request for capability information of the first node from the second node, transmit the capability information to the second node, receive, from the second node, configuration information for constructing a relation between a background knowledge graph and a semantic representation vector based on the capability information, wherein the configuration information includes information about a second number that is a reference size of the background knowledge graph, and perform construction of the relation through connections of edges between the semantic representation vector and first node vectors in the background knowledge graph based on the configuration information and a first number of nodes by which the first node configures the background knowledge graph, wherein the first node vectors include a selected few of second node vectors configuring the background knowledge graph.

According to various embodiments of the present disclosure, there is provided a second node in a communication system, the second node comprising a transceiver and at least one processor, wherein the at least one processor is configured to transmit one or more synchronization signals to a first node, transmit system information to the first node, receive a random access preamble from the first node, transmit a random access response to the first node, transmit a request for capability information of the first node to the second node, receive the capability information from the first node, and transmit, to the first node, configuration information for constructing a relation between the background knowledge graph and a semantic representation vector based on the capability information, wherein the configuration information includes information of a second number which is a reference size of a background knowledge graph, wherein the relation between the background knowledge graph and the semantic representation vector is constructed through connections of edges between the semantic representation vector and first node vectors in the background knowledge graph based on the configuration information and a first number of nodes that configure the background knowledge graph related to the first node, and wherein the first node vectors include a selected few of second node vectors configuring the background knowledge graph.

According to various embodiments of the present disclosure, there is provided a control device controlling a first node in a communication system, the control device comprising at least one processor and at least one memory operably connected to the at least one processor, wherein the at least one memory stores instructions performing operations based on being executed by the at least one processor, wherein the operations comprise receiving one or more synchronization signals from a second node, receiving system information from the second node, transmitting a random access preamble to the second node, receiving a random access response from the second node, receiving a request for capability information of the first node from the second node, transmitting the capability information to the second node, receiving, from the second node, configuration information for constructing a relation between a background knowledge graph and a semantic representation vector based on the capability information, wherein the configuration information includes information about a second number that is a reference size of the background knowledge graph, and performing construction of the relation through connections of edges between the semantic representation vector and first node vectors in the background knowledge graph based on the configuration information and a first number of nodes by which the first node configures the background knowledge graph, wherein the first node vectors include a selected few of second node vectors configuring the background knowledge graph.

According to various embodiments of the present disclosure, there is provided a control device controlling a second node in a communication system, the control device comprising at least one processor and at least one memory operably connected to the at least one processor, wherein the at least one memory stores instructions performing operations based on being executed by the at least one processor, wherein the operations comprise transmitting one or more synchronization signals to a first node, transmitting system information to the first node, receiving a random access preamble from the first node, transmitting a random access response to the first node, transmitting a request for capability information of the first node to the second node, receiving the capability information from the first node, and transmitting, to the first node, configuration information for constructing a relation between the background knowledge graph and a semantic representation vector based on the capability information, wherein the configuration information includes information of a second number which is a reference size of a background knowledge graph, wherein the relation between the background knowledge graph and the semantic representation vector is constructed through connections of edges between the semantic representation vector and first node vectors in the background knowledge graph based on the configuration information and a first number of nodes that configure the background knowledge graph related to the first node, and wherein the first node vectors include a selected few of second node vectors configuring the background knowledge graph.

According to various embodiments of the present disclosure, there are provided one or more non-transitory computer readable mediums storing one or more instructions, wherein the one or more instructions perform operations based on being executed by one or more processors, wherein the operations comprise receiving one or more synchronization signals from a second node, receiving system information from the second node, transmitting a random access preamble to the second node, receiving a random access response from the second node, receiving a request for capability information of the first node from the second node, transmitting the capability information to the second node, receiving, from the second node, configuration information for constructing a relation between a background knowledge graph and a semantic representation vector based on the capability information, wherein the configuration information includes information about a second number that is a reference size of the background knowledge graph, and performing construction of the relation through connections of edges between the semantic representation vector and first node vectors in the background knowledge graph based on the configuration information and a first number of nodes by which the first node configures the background knowledge graph, wherein the first node vectors include a selected few of second node vectors configuring the background knowledge graph.

According to various embodiments of the present disclosure, there are provided one or more non-transitory computer readable mediums storing one or more instructions, wherein the one or more instructions perform operations based on being executed by one or more processors, wherein the operations comprise transmitting one or more synchronization signals to a first node, transmitting system information to the first node, receiving a random access preamble from the first node, transmitting a random access response to the first node, transmitting a request for capability information of the first node to the second node, receiving the capability information from the first node, and transmitting, to the first node, configuration information for constructing a relation between the background knowledge graph and a semantic representation vector based on the capability information, wherein the configuration information includes information of a second number which is a reference size of a background knowledge graph, wherein the relation between the background knowledge graph and the semantic representation vector is constructed through connections of edges between the semantic representation vector and first node vectors in the background knowledge graph based on the configuration information and a first number of nodes that configure the background knowledge graph related to the first node, and wherein the first node vectors include a selected few of second node vectors configuring the background knowledge graph.

[Advantageous Effects]

The present disclosure can provide an apparatus and a method for performing a background knowledge update based on a semantic representation in a semantic communication.

The present disclosure can provide an apparatus and a method for constructing a relation between a background knowledge and a semantic representation vector for a background knowledge update that satisfies two properties of alignment and uniformity on a unit hypersphere and previously holds a generated and delivered semantic representation vector, including an intention to be delivered in a system in which semantic communication can be performed.

[Description of Drawings]

The drawings attached below are intended to aid understanding of the present disclosure and may provide embodiments of the present disclosure along with a detailed description. However, the technical features of the present disclosure are not limited to specific drawings, and the features disclosed in each drawing may be combined to form a new embodiment. Reference numerals in each drawing may refer to structural elements.

FIG. 1 illustrates an example of physical channels and general signal transmission used for the 3GPP system.
FIG. 2 illustrates system architecture of new generation radio access network (NG-RAN).
FIG. 3 illustrates functional split between NG-RAN and 5GC.
FIG. 4 illustrates an example of 5G usage scenario.

FIG. 5 illustrates an example of a communication structure providable in a 6G system.

FIG. 6 illustrates schematically an example of a structure of a perceptron.

FIG. 7 illustrates schematically an example of a structure of a multilayer perceptron.

FIG. 8 illustrates schematically an example of a deep neural network.

FIG. 9 illustrates schematically an example of a convolutional neural network.

FIG. 10 illustrates schematically an example of a filter operation of a convolutional neural network.

FIG. 11 illustrates schematically an example of a neural network structure in which a circular loop exists.

FIG. 12 illustrates schematically an example of an operation structure of a recurrent neural network.

FIG. 13 is a diagram illustrating an example of communication models of three levels related to semantic communication in a system applicable to the present disclosure.

FIG. 14 is a diagram illustrating an example of a source and a destination of semantic information in the system applicable to the present disclosure.

FIG. 15 is a diagram illustrating an example of a contrastive learning operation in the system applicable to the present disclosure.

FIG. 16 is a diagram illustrating an example of instance discrimination in the system applicable to the present disclosure.

FIG. 17 is a diagram illustrating an example of data augmentation when a data modality is an image in the system applicable to the present disclosure.

FIG. 18 is a diagram illustrating an example of alignment and uniformity of feature distribution on an output unit hypersphere in the system applicable to the present disclosure.

FIG. 19 is a diagram illustrating an example of a collapse pattern in the system applicable to the present disclosure.

FIG. 20 is a diagram illustrating an example of distribution of vectors located on a unit hypersphere in the system applicable to the present disclosure.

FIG. 21 is a diagram illustrating an example of a degree formed by two vectors on the unit hypersphere in the system applicable to the present disclosure.

FIG. 22 is a diagram illustrating an example of a process of initializing related information for a semantic representation based background knowledge update in the system applicable to the present disclosure.

FIG. 23 is a diagram illustrating an example of a set corresponding to a node pair and an edge to which a score function is applied in the system applicable to the present disclosure.

FIG. 24 is a diagram illustrating an example of a representative heuristic method usable for the score function in the system applicable to the present disclosure.

FIG. 25 is a diagram illustrating an example of relation construction according to degrees formed by a delivered semantic representation vector and background knowledge graph node vectors in the system applicable to the present disclosure.

FIG. 26 is a diagram illustrating an example of granting a weight to a relation (edge) constructed with the semantic representation vector in the system applicable to the present disclosure.

FIG. 27 is a diagram illustrating an example of a sub-graph extraction process for selecting a relation construction candidate from a background knowledge graph in the system applicable to the present disclosure.

FIG. 28 is a diagram illustrating an example of relation construction according to degrees formed by the delivered semantic representation vector and the background knowledge graph node vectors in the system applicable to the present disclosure.

FIG. 29 is a diagram illustrating an example of granting a weight to a relation (edge) constructed with the semantic representation vector in the system applicable to the present disclosure.

FIG. 30 is a diagram illustrating an example of an operation process of a first node in the system applicable to the present disclosure.

FIG. 31 is a diagram illustrating an example of an operation process of a second node in the system applicable to the present disclosure.

FIG. 32 illustrates a communication system 1 applied to various embodiments of the present disclosure.

FIG. 33 illustrates a wireless device applicable to various embodiments of the present disclosure.

FIG. 34 illustrates another example of a wireless device applicable to various embodiments of the present disclosure.

FIG. 35 illustrates a signal processing circuit for a transmission signal.

FIG. 336 illustrates another example of a wireless device applied to various embodiments of the present disclosure.

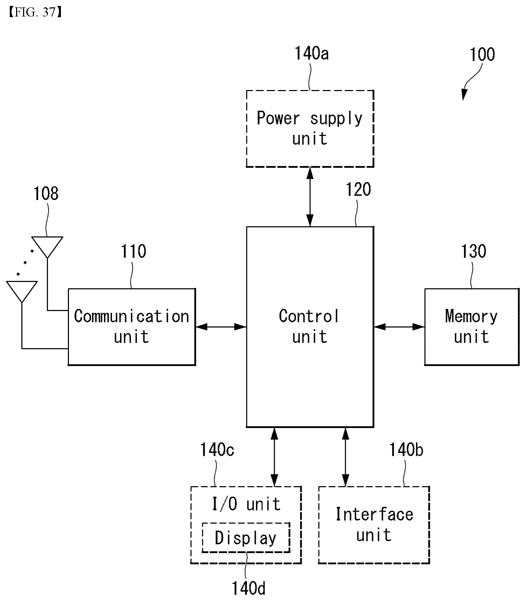

FIG. 37 illustrates a hand-held device applied to various embodiments of the present disclosure.

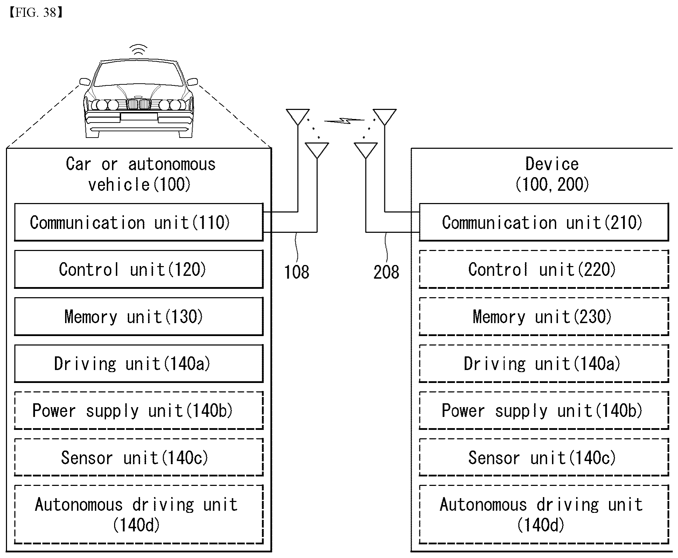

FIG. 38 illustrates a vehicle or an autonomous vehicle applied to various embodiments of the present disclosure.

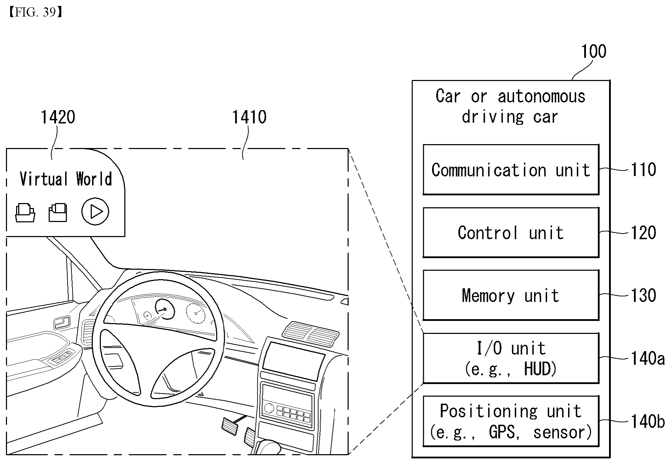

FIG. 39 illustrates a vehicle applied to various embodiments of the present disclosure.

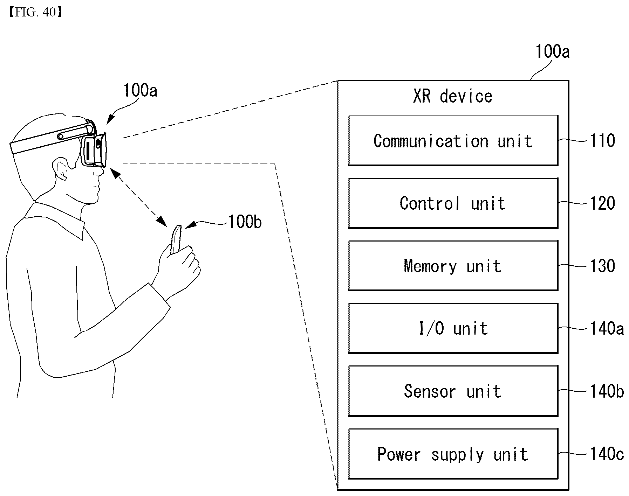

FIG. 40 illustrates an XR device applied to various embodiments of the present disclosure.

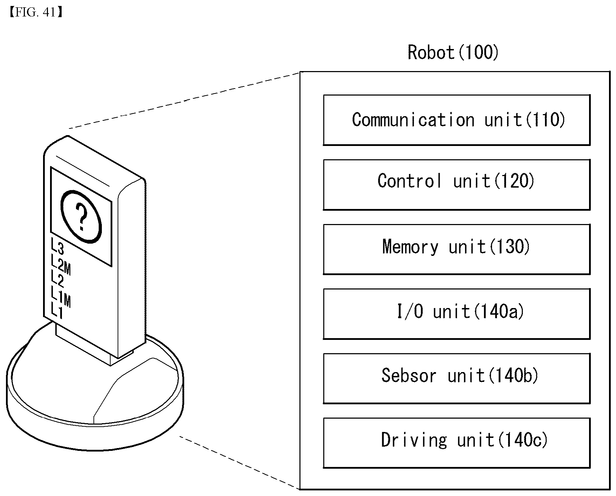

FIG. 41 illustrates a robot applied to various embodiments of the present disclosure.

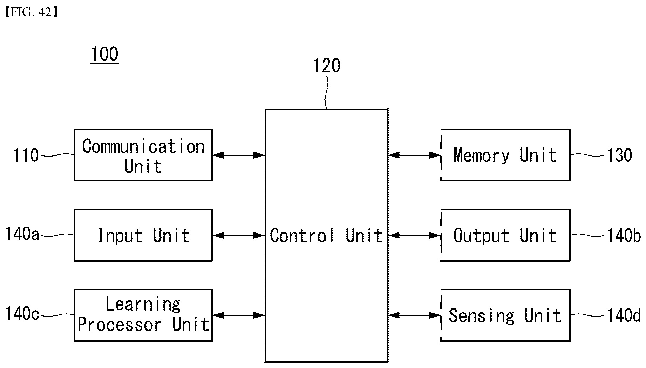

FIG. 42 illustrates an AI device applied to various embodiments of the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro. 3GPP 6G may be an evolved version of 3GPP NR.

For clarity in the description, the following description will mostly focus on 3GPP communication system (e.g. LTE-A or 5G NR). However, technical features according to an embodiment of the present disclosure will not be limited only to this. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. 3GPP 6G may mean technology after TS Release 17 and/or Release 18. "xxx" means a detailed standard document number. The LTE/NR/6G may be collectively referred to as the 3GPP system. For terms and techniques not specifically described among terms and techniques used in the present disclosure, reference may be made to a wireless communication standard document published before the present disclosure is filed. For example, the following document may be referred to.

3GPP LTE

- 36.211: Physical channels and modulation
- 36.212: Multiplexing and channel coding
- 36.213: Physical layer procedures
- 36.300: Overall description
- 36.331: Radio Resource Control (RRC)

3GPP NR

- 38.211: Physical channels and modulation
- 38.212: Multiplexing and channel coding

- 38.213: Physical layer procedures for control
- 38.214: Physical layer procedures for data
- 38.300: NR and NG-RAN Overall Description
- 38.331: Radio Resource Control (RRC) protocol specification

Physical Channel and Frame Structure

Physical Channel and General Signal Transmission

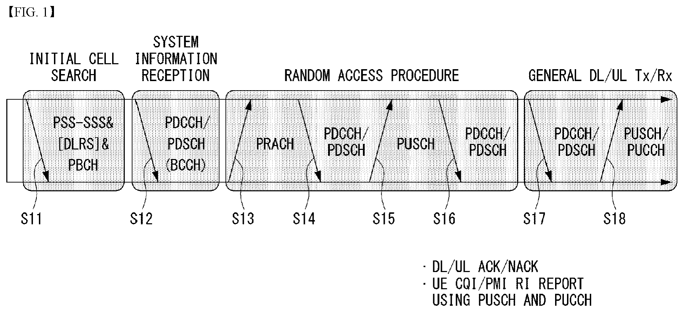

FIG. 1 illustrates an example of physical channels and general signal transmission used for the 3GPP system.

In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S11). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S12).

When there is no radio resource first accessing the eNB or for signal transmission, the UE may perform a Random Access Procedure (RACH) to the eNB (S13 to S16). To this end, the UE may transmit a specific sequence to a preamble through a Physical Random Access Channel (PRACH) (S13 and S15) and receive a response message (Random Access Response (RAR) message) for the preamble through the PDCCH and a corresponding PDSCH. In the case of a contention based RACH, a Contention Resolution Procedure may be additionally performed (S16).

The UE that performs the above procedure may then perform PDCCH/PDSCH reception (S17) and Physical Uplink Shared Channel (PUSCH)/Physical Uplink Control Channel (PUCCH) transmission (S18) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., via the PUSCH and/or PUCCH.

Structure of Uplink and Downlink Channels

Downlink Channel Structure

A base station transmits a related signal to a UE via a downlink channel to be described later, and the UE receives the related signal from the base station via the downlink channel to be described later.

(1) Physical Downlink Shared Channel (PDSCH)

A PDSCH carries downlink data (e.g., DL-shared channel transport block, DL-SCH TB) and is applied with a modulation method such as quadrature phase shift keying (QPSK), 16 quadrature amplitude modulation (QAM), 64 QAM, and 256 QAM. A codeword is generated by encoding TB. The PDSCH may carry multiple codewords. Scrambling and modulation mapping are performed for each codeword, and modulation symbols generated from each codeword are mapped to one or more layers (layer mapping). Each layer is mapped to a resource together with a demodulation reference signal (DMRS) to generate an OFDM symbol signal, and is transmitted through a corresponding antenna port.

(2) Physical Downlink Control Channel (PDCCH)

A PDCCH carries downlink control information (DCI) and is applied with a QPSK modulation method, etc. One PDCCH consists of 1, 2, 4, 8, or 16 control channel elements (CCEs) based on an aggregation level (AL). One CCE consists of 6 resource element groups (REGs). One REG is defined by one OFDM symbol and one (P)RB.

The UE performs decoding (aka, blind decoding) on a set of PDCCH candidates to acquire DCI transmitted via the PDCCH. The set of PDCCH candidates decoded by the UE is defined as a PDCCH search space set. The search space set may be a common search space or a UE-specific search space. The UE may acquire DCI by monitoring PDCCH candidates in one or more search space sets configured by MIB or higher layer signaling.

Uplink Channel Structure

A UE transmits a related signal to a base station via an uplink channel to be described later, and the base station receives the related signal from the UE via the uplink channel to be described later.

(1) Physical Uplink Shared Channel (PUSCH)

A PUSCH carries uplink data (e.g., UL-shared channel transport block, UL-SCH TB) and/or uplink control information (UCI) and is transmitted based on a CP-OFDM (Cyclic Prefix-Orthogonal Frequency Division Multiplexing) waveform, DFT-s-OFDM (Discrete Fourier Transform-spread-Orthogonal Frequency Division Multiplexing) waveform, or the like. When the PUSCH is transmitted based on the DFT-s-OFDM waveform, the UE transmits the PUSCH by applying a transform precoding. For example, if the transform precoding is not possible (e.g., transform precoding is disabled), the UE may transmit the PUSCH based on the CP-OFDM waveform, and if the transform precoding is possible (e.g., transform precoding is enabled), the UE may transmit the PUSCH based on the CP-OFDM waveform or the DFT-s-OFDM waveform. The PUSCH transmission may be dynamically scheduled by an UL grant within DCI, or may be semi-statically scheduled based on high layer (e.g., RRC) signaling (and/or layer 1 (L1) signaling (e.g., PDCCH)) (configured grant). The PUSCH transmission may be performed based on a codebook or a non-codebook.

(2) Physical Uplink Control Channel (PUCCH)

A PUCCH carries uplink control information, HARQ-ACK, and/or scheduling request (SR), and may be divided into multiple PUCCHs based on a PUCCH transmission length.

New radio access technology (RAT, NR) is described below.

As more and more communication devices require larger communication capacity, there is a need for enhanced mobile broadband communication compared to the existing radio access technology (RAT). Massive machine type communications (MTCs) which provide various services anytime and anywhere by connecting many devices and objects are also one of the major issues to be considered in next-generation communications. In addition, a communication system design considering a service/UE sensitive to reliability and latency is also being discussed. As above, the introduction of next generation radio access technology considering enhanced mobile broadband communication, massive MTC, ultra-reliable and low latency communication (URLLC), etc. is discussed, and the technology is called new RAT or NR for convenience in various embodiments of the present disclosure.

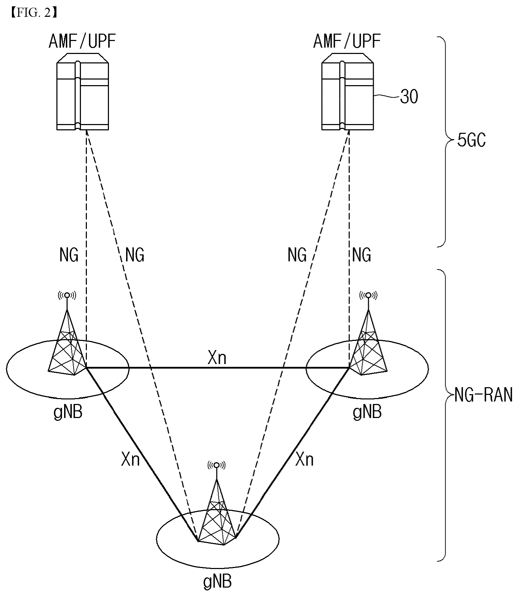

FIG. 2 illustrates system architecture of new generation radio access network (NG-RAN).

Referring to FIG. 2, the NG-RAN may include gNB and/or eNB providing user plane and control plane protocol terminations toward the UE. FIG. 2 illustrates an example where the NG-RAN includes only the gNB. The gNB and the eNB are interconnected via Xn interface. The gNB and the eNB are connected to the 5G core network (5GC) via NG interface. More specifically, the gNB and the eNB are connected to an access and mobility management function (AMF) via NG-C interface and connected to a user plane function (UPF) via NG-U interface.

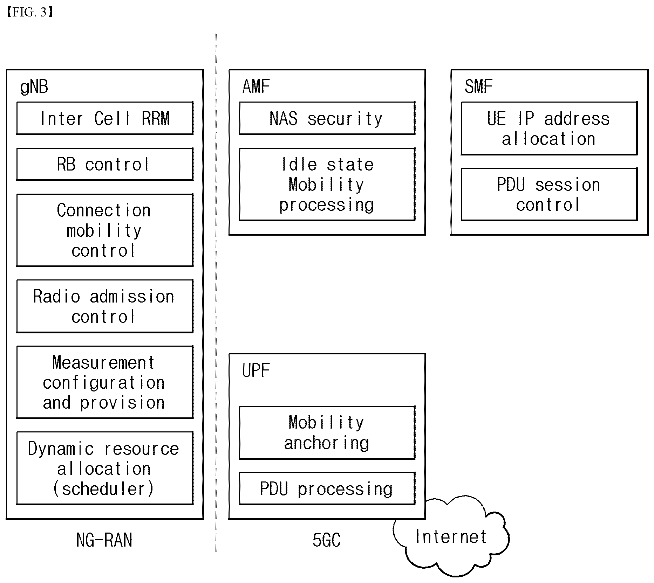

FIG. 3 illustrates functional split between NG-RAN and 5GC.

Referring to FIG. 3, the gNB may provide functions including Inter Cell RRM, RB control, connection mobility control, radio admission control, measurement configuration and provision, dynamic resource allocation, etc. The AMF may provide functions including non-access stratum (NAS) security, idle state mobility processing, etc. The UPF may provide functions including mobility anchoring, protocol data unit (PDU) processing, etc. The session management function (SMF) may provide functions including UE IP address allocation, PDU session control, etc.

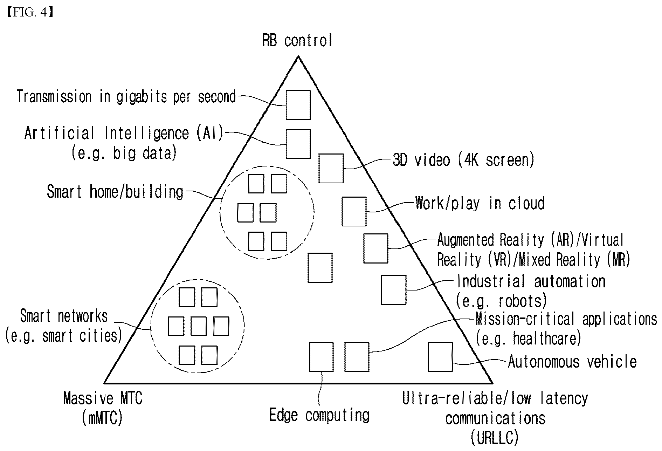

FIG. 4 illustrates an example of 5G usage scenario.

The 5G usage scenario illustrated in FIG. 4 is merely an example, and technical features according to various embodiments of the present disclosure can be applied to other 5G usage scenarios that are not illustrated in FIG. 4.

Referring to FIG. 4, three major requirement areas of 5G include (1) an enhanced mobile broadband (eMBB) area, (2) a massive machine type communication (mMTC) area and (3) an ultra-reliable and low latency communications (URLLC) area. Some use cases may require multiple areas for optimization, and other use case may focus only on one key performance indicator (KPI). 5G intends to support such diverse use cases in a flexible and reliable way.

eMBB focuses on across-the-board enhancements to the data rate, latency, user density, capacity and coverage of mobile broadband access. eMBB targets throughput of about 10Gbps. eMBB goes far beyond basic mobile Internet access and covers rich interactive work, media and entertainment applications in the cloud or augmented reality. Data will be one of the key drivers for 5G and in new parts of this system we may for the first time see no dedicated voice service in the 5G era. In 5G, voice is expected to be handled as an application, simply using the data connectivity provided by the communication system. The main drivers for the increased traffic volume include an increase in size of content and an increase in the number of applications requiring high data transfer rates. Streaming service (audio and video), interactive video and mobile Internet connectivity will continue to be used more broadly as more devices connect to the Internet. Many of these applications require always-on connectivity to push real time information and notifications to the users. Cloud storage and applications are rapidly increasing for mobile communication platforms. This is applicable for both work and entertainment. Cloud storage is one particular use case driving the growth of uplink data transfer rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality for entertainment and information retrieval. The augmented reality requires very low latencies and significant instant data volumes.

mMTC is designed to enable communication between devices that are low-cost, massive in number and battery-driven, and is intended to support applications such as smart metering, logistics, and field and body sensors. mMTC targets batteries with a lifespan of about 10 years and/or about 1 million devices per km2. mMTC enables to smoothly connect embedded sensors in all fields and is one of the most expected 5G use case. It is predicted that IoT devices will potentially reach 20.4 billion by 2020. Industrial IoT is one area where 5G will play a major role, enabling smart cities, asset tracking, smart utilities, agriculture, and security infrastructure.

URLLC will make it possible for devices and machines to communicate with ultra-reliability, very low latency and high availability, making it ideal for vehicular communication, industrial control, factory automation, remote surgery, smart grids and public safety applications. URLLC targets latency of about 1ms. URLLC includes new services that will transform industries with ultra-reliable/low latency links like remote control of critical infrastructure and an autonomous vehicle. The level of reliability and latency is vital to smart grid control, industrial automation, robotics, and drone control and coordination.

Next, multiple use cases included within the triangle of FIG. 4 are described in more detail.

5G may supplement fiber-to-the-home (FTTH) and cable-based broadband (or DOCSIS) as means for providing a stream evaluated from gigabits per second to several hundreds of megabits per second. Such fast speed may be necessary to deliver TV with resolution of 4K or more (6K, 8K or more) in addition to virtual reality (VR) and augmented reality (AR). VR and AR applications include immersive sports games. A specific application may require special network configuration. For example, in the VR game, in order for game companies to minimize latency, a core server may need to be integrated with an edge network server of a network operator.

The automotive sector is expected to be an important new driver for 5G, along with many use cases for mobile communications for vehicles. For example, entertainment for passengers requires high capacity and high mobile broadband at the same time. The reason for this is that future users will expect to continue their good quality connection independent of their location and speed. Other use cases for the automotive sector are augmented reality dashboards. The augmented reality dashboards display overlay information on top of what a driver is seeing through the front window through the augmented reality dashboards, identifying objects in the dark and telling the driver about the distances and movements of the objects. In the future, wireless modules will enable communication between vehicles, information exchange between vehicles and supporting infrastructure, and information exchange between vehicles and other connected devices (e.g., devices carried by pedestrians). Safety systems guide drivers on alternative courses of action to allow them to drive more safely and lower the risks of accidents. A next phase will be a remotely controlled vehicle or an autonomous vehicle. This requires ultra reliable and very fast communication between different autonomous vehicles and/or between vehicles and infrastructure. In the future, an autonomous vehicle may take care of all driving activity, allowing the driver to rest and concentrate only on traffic anomalies that the vehicle itself cannot identify. The technical requirements for autonomous vehicles require for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost and energy-efficient maintenance of the city or home. A similar setup can be done for each home, where temperature sensors, window and heating controllers, burglar alarms and home appliances are all connected wirelessly. Many of these sensors are typically low data rate, low power and low cost. However, for example, real time HD video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information can include the behaviors of suppliers and consumers, allowing the smart grid to improve the efficiency, reliability, economics and sustainability of the production and distribution of fuels such as electricity in an automated fashion. A smart grid can be seen as another sensor network with low delays.

The health sector has many applications that can benefit from mobile communications. Communications systems enable telemedicine, which provides clinical health care at a distance. It helps eliminate distance barriers and can improve access to medical services that would often not be consistently available in distant rural communities. It is also used to save lives in critical care and emergency situations. Wireless sensor networks based on mobile communication can provide remote monitoring and sensors for parameters such as heart rate and blood pressure.

Wireless and mobile communications are becoming increasingly important for industrial application. Wires are expensive to install and maintain. Therefore, the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Logistics and freight tracking are important use cases for mobile communications that enable the tracking of inventory and packages wherever they are through using location based information systems. The logistics and freight use cases typically require lower data rates but need wide coverage and reliable location information.

Examples of next generation communication (e.g., 6G) that can be applied to various embodiments of the present disclosure are described below.

6G system general

A 6G (wireless communication) system has purposes such as (i) a very high data rate per device, (ii) a very large number of connected devices, (iii) global connectivity, (iv) a very low latency, (v) a reduction in energy consumption of battery-free IoT devices, (vi) ultra-reliable connectivity, and (vii) connected intelligence with machine learning capability. The vision of the 6G system may include four aspects such as intelligent connectivity, deep connectivity, holographic connectivity, and ubiquitous connectivity, and the 6G system may satisfy the requirements shown in Table 1 below. That is, Table 1 shows an example of the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion, and enhanced data security.

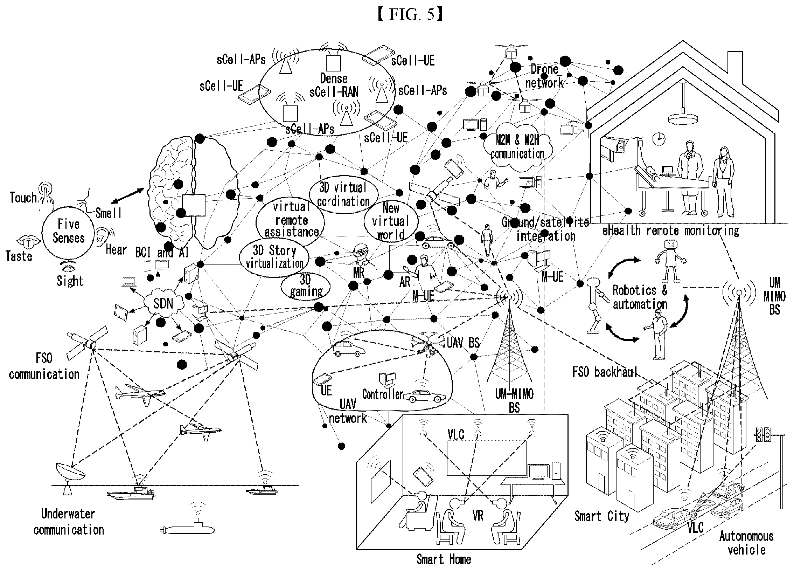

FIG. 5 illustrates an example of a communication structure providable in a 6G system.

The 6G system is expected to have 50 times greater simultaneous wireless communication connectivity than a 5G wireless communication system. URLLC, which is the key feature of 5G, will become more important technology by providing an end-to-end latency less than 1 ms in 6G communication. The 6G system may have much better volumetric spectrum efficiency unlike frequently used domain spectrum efficiency. The 6G system can provide advanced battery technology for energy harvesting and very long battery life, and thus mobile devices may not need to be separately charged in the 6G system. In 6G, new network characteristics may be as follows.

- Satellites integrated network: To provide a global mobile group, 6G will be integrated with satellite. Integration of terrestrial, satellite and public networks into one wireless communication system is critical for 6G.
- Connected intelligence: Unlike the wireless communication systems of previous generations, 6G is innovative and may update wireless evolution from "connected things" to "connected intelligence". AI may be applied in each step (or each signal processing procedure to be described later) of a communication procedure.

- Seamless integration of wireless information and energy transfer: A 6G wireless network may transfer power to charge batteries of devices such as smartphones and sensors. Therefore, wireless information and energy transfer (WIET) will be integrated.
- Ubiquitous super 3D connectivity: Access to networks and core network functions of drone and very low earth orbit satellite will establish super 3D connectivity in 6G ubiquitous.

In the new network characteristics of 6G described above, several general requirements may be as follows.

- Small cell networks: The idea of a small cell network has been introduced to improve received signal quality as a result of throughput, energy efficiency, and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network consisting of heterogeneous networks improves overall QoS and reduces costs.
- High-capacity backhaul: Backhaul connectivity is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability. Further, billions of devices can be shared on a shared physical infrastructure.

Core implementation technology of 6G System

Artificial Intelligence (AI)

Technology which is most important in the 6G system and will be newly introduced is AI. AI was not involved in the 4G system. The 5G system will support partial or very limited AI. However, the 6G system will support AI for full automation. Advance in machine learning will create a more intelligent network for real-time communication in 6G. When AI is introduced to communication, real-time data transmission can be simplified and improved. AI may determine a method of performing complicated target tasks using countless analysis. That is, AI can increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, and in particular, deep learning has been focused on the wireless resource management and allocation field. However, such studies have been gradually developed to the MAC layer and the physical layer, and in particular, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. The machine learning may also be used for antenna selection, power control, symbol detection, etc. in the MIMO system.

However, application of a deep neutral network (DNN) for transmission in the physical layer may have the following problems.

A deep learning based AI algorithm requires a lot of training data in order to optimize training parameters. However, due to limitations in acquiring data in a specific channel environment as the training data, a lot of training data is used offline. Static training for the training data in the specific channel environment may cause a contradiction between the diversity and dynamic characteristics of a radio channel.

Currently, the deep learning mainly targets real signals. However, signals of the physical layer of wireless communication are complex signals. For matching of the characteristics of a wireless communication signal, studies on a neural network for detecting a complex domain signal are further required.

Hereinafter, machine learning is described in more detail.

Machine learning refers to a series of operations to train a machine in order to create a machine capable of doing tasks that people cannot do or are difficult for people to do. Machine learning requires data and learning models. In the machine learning, a data learning method may be roughly divided into three methods, that is, supervised learning, unsupervised learning and reinforcement learning.

Neural network learning is to minimize an output error. The neural network learning refers to a process of repeatedly inputting training data to a neural network, calculating an error of an output and a target of the neural network for the training data, backpropagating the error of the neural network from an output layer to an input layer of the neural network for the purpose of reducing the error, and updating a weight of each node of the neural network.

The supervised learning may use training data labeled with a correct answer, and the unsupervised learning may use training data which is not labeled with a correct answer. That is, for example, in supervised learning for data classification, training data may be data in which each training data is labeled with a category. The labeled training data may be input to the neural network, and the error may be calculated by comparing the output (category) of the neural network with the label of the training data. The calculated error is backpropagated in the neural network in the reverse direction (i.e., from the output layer to the input layer), and a connection weight of respective nodes of each layer of the neural network may be updated based on the backpropagation. Change in the updated connection weight of each node may be determined depending on a learning rate. The calculation of the neural network for input data and the backpropagation of the error may construct a learning cycle (epoch). The learning rate may be differently applied based on the number of repetitions of the learning cycle of the neural network. For example, in the early stage of learning of the neural network, efficiency can be increased by allowing the neural network to rapidly ensure a certain level of performance using a high learning rate, and in the late of learning, accuracy can be increased using a low learning rate.

The learning method may vary depending on the feature of data. For example, in order for a reception end to accurately predict data transmitted from a transmission end on a communication system, it is preferable that learning is performed using the supervised learning rather than the unsupervised learning or the reinforcement learning.

The learning model corresponds to the human brain and may be regarded as the most basic linear model. However, a paradigm of machine learning using, as the learning model, a neural network structure with high complexity, such as artificial neural networks, is referred to as deep learning.

Neural network cores used as the learning method may roughly include a deep neural network (DNN) method, a convolutional deep neural network (CNN) method, and a recurrent Boltzmann machine (RNN) method.

The artificial neural network is an example of connecting several perceptrons.

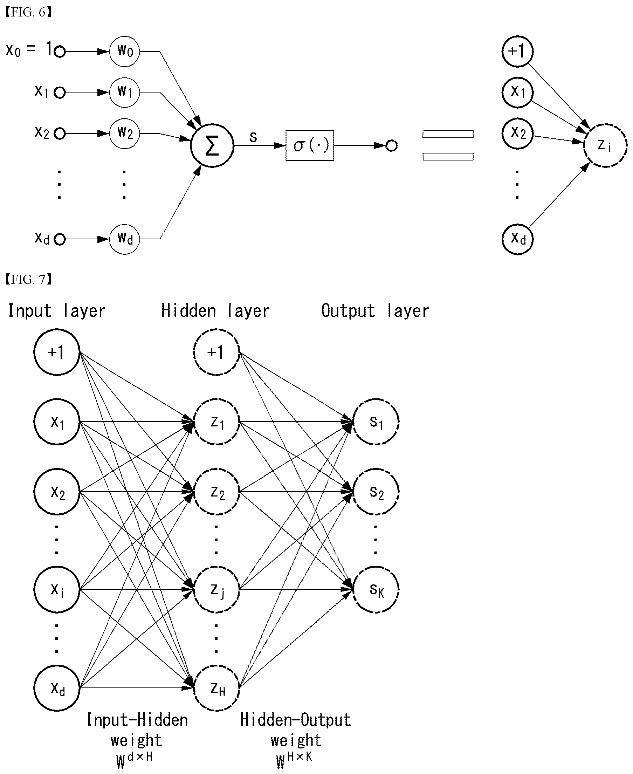

FIG. 6 illustrates an example of a structure of a perceptron.

Referring to FIG. 6, when an input vector x=(x1, x2, ..., xd) is input, each component is multiplied by a weight (W1, W2, ..., Wd), and all the results are summed. After that, the entire process of applying an activation function $\sigma(\cdot)$ is called a perceptron. The huge artificial neural network structure may extend the simplified perceptron structure illustrated in FIG. 6 to apply the input vector to different multidimensional perceptrons. For convenience of explanation, an input value or an output value is referred to as a node.

The perceptron structure illustrated in FIG. 6 may be described as consisting of a total of three layers based on the input value and the output value. FIG. 7 illustrates an artificial neural network in which the number of (d+1) dimensional perceptrons between a first layer and a second layer is H, and the number of (H+1) dimensional perceptrons between the second layer and a third layer is K, by way of example.

FIG. 7 illustrates an example of a structure of a multilayer perceptron.

A layer where the input vector is located is called an input layer, a layer where a final output value is located is called an output layer, and all layers located between the input layer and the output layer are called a hidden layer. FIG. 7 illustrates three layers, by way of example. However, since the number of layers of the artificial neural network is counted excluding the input layer, it can be seen as a total of two layers. The artificial neural network is constructed by connecting the perceptrons of a basic block in two dimensions.

The above-described input layer, hidden layer, and output layer can be jointly applied in various artificial neural network structures, such as CNN and RNN to be described later, as well as the multilayer perceptron. The greater the number of hidden layers, the deeper the artificial neural network is, and a machine learning paradigm that uses the sufficiently deep artificial neural network as a learning model is called deep learning. In addition, the artificial neural network used for deep learning is called a deep neural network (DNN).

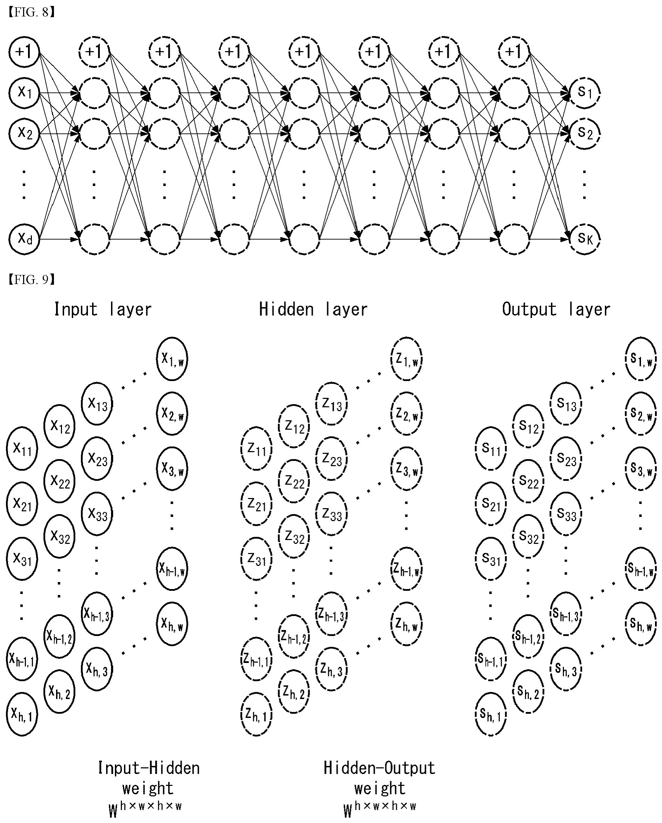

FIG. 8 illustrates an example of a deep neural network.

The deep neural network illustrated in FIG. 8 is a multilayer perceptron consisting of eight hidden layers + eight output layers. The multilayer perceptron structure is expressed as a fully connected neural network. In the fully connected neural network, a connection relationship does not exist between nodes located at the same layer, and a connection relationship exists only between nodes located at contiguous layers. The DNN has a fully connected neural network structure and is composed of a combination of multiple hidden layers and activation functions, so it can be usefully applied to understand correlation characteristics between input and output. The correlation characteristic may mean a joint probability of input and output.

Based on how the plurality of perceptrons are connected to each other, various artificial neural network structures different from the above-described DNN can be formed.

FIG. 9 illustrates an example of a structure of a convolutional neural network.

In the DNN, nodes located inside one layer are arranged in a one-dimensional longitudinal direction. However, in FIG. 9, it may be assumed that w nodes horizontally and h nodes vertically are arranged in two dimensions (convolutional neural network structure of FIG. 9). In this case, since in a connection process leading from one input node to the hidden layer, a weight is given for each connection, a total of h×w weights needs to be considered. Since there are h×w nodes in the input layer, a total of h2w2 weights are required between two contiguous layers.

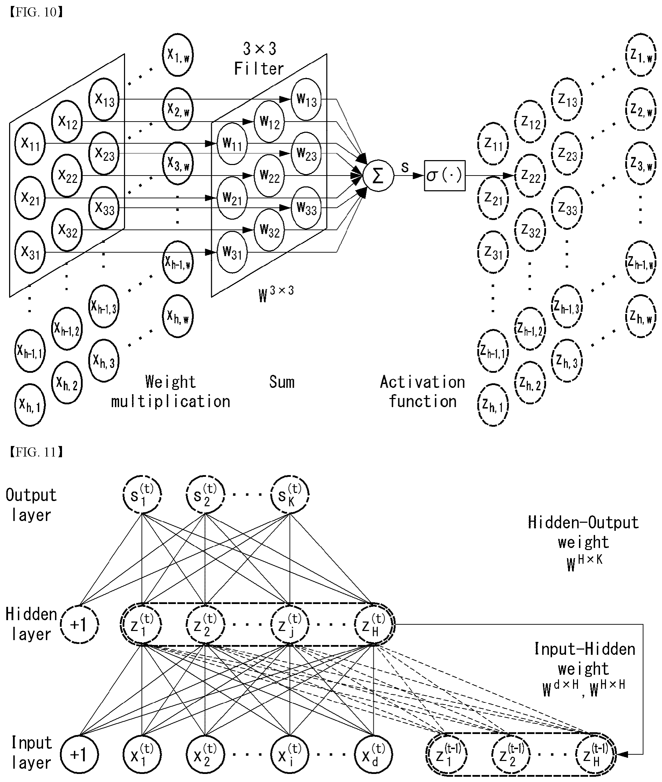

The convolutional neural network of FIG. 9 has a problem in that the number of weights increases exponentially depending on the number of connections. Therefore, instead of considering the connections of all the nodes between contiguous layers, it is assumed that a small-sized filter exists, and a weighted sum and an activation function calculation are performed on an overlap portion of the filters as illustrated in FIG. 10.

FIG. 10 illustrates an example of a filter operation of a convolutional neural network.

One filter has a weight corresponding to the number as much as its size, and learning of the weight may be performed so that a certain feature on an image can be extracted and output as a factor. In FIG. 10, a filter having a size of 3×3 is applied to the upper leftmost 3×3 area of the input layer, and an output value obtained by performing a weighted sum and an activation function calculation for a corresponding node is stored in z22.

The filter performs the weighted sum and the activation function calculation while moving horizontally and vertically by a predetermined interval when scanning the input layer, and places the output value at a location of a current filter. This calculation method is similar to the convolution operation on images in the field of computer vision. Thus, a deep neural network with this structure is referred to as a convolutional neural network (CNN), and a hidden layer generated as a result of the convolution operation is referred to as a convolutional layer. In addition, a neural network in which a plurality of convolutional layers exists is referred to as a deep convolutional neural network (DCNN).

At the node where a current filter is located at the convolutional layer, the number of weights may be reduced by calculating a weighted sum including only nodes located in an area covered by the filter. Hence, one filter can be used to focus on features for a local area. Accordingly, the CNN can be effectively applied to image data processing in which a physical distance on the 2D area is an important criterion. In the CNN, a plurality of filters may be applied immediately before the convolution layer, and a plurality of output results may be generated through a convolution operation of each filter.

There may be data whose sequence characteristics are important depending on data attributes. A structure, in which a method of inputting one element on the data sequence at each time step considering a length variability and a relationship of the sequence data and inputting an output vector (hidden vector) of a hidden layer output at a specific time step together with a next element on the data sequence is applied to the artificial neural network, is referred to as a recurrent neural network structure.

FIG. 11 illustrates an example of a neural network structure in which a circular loop exists.

Referring to FIG. 11, a recurrent neural network (RNN) is a structure in which in a process of inputting elements (x1(t), x2(t),..., xd(t)) of any line of sight 't' on a data sequence to a fully connected neural network, hidden vectors (z1(t-1), z2(t-1), ..., zH(t-1)) are input together at an immediately previous time step (t-1) to apply a weighted sum and an activation function. A reason for transferring the hidden vectors at a next time step is that information within the input vector in previous time steps is considered to be accumulated on the hidden vectors of a current time step.

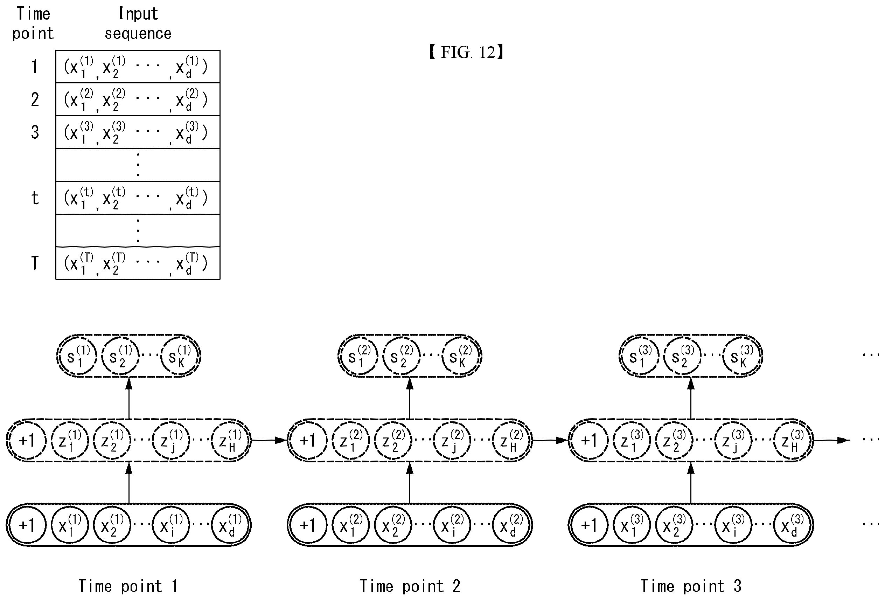

FIG. 12 illustrates an example of an operation structure of a recurrent neural network.

Referring to FIG. 12, the recurrent neural network operates in a predetermined order of time with respect to an input data sequence.

Hidden vectors (z1(1), z2(1), ..., zH(1)) when input vectors (x1(t), x2(t), ..., xd(t)) at a time step 1 are input to the recurrent neural network, are input together with input vectors (x1(2), x2(2), ..., xd(2)) at a time step 2 to determine vectors (z1(2), z2(2), ..., zH(2)) of a hidden layer through a weighted sum and an activation function. This process is repeatedly performed at time steps 2, 3, ..., T.

When a plurality of hidden layers are disposed in the recurrent neural network, this is referred to as a deep recurrent neural network (DRNN). The recurrent neural network is designed to be usefully applied to sequence data (e.g., natural language processing).

A neural network core used as a learning method includes various deep learning methods such as a restricted Boltzmann machine (RBM), a deep belief network (DBN), and a deep Q-network, in addition to the DNN, the CNN, and the RNN, and may be applied to fields such as computer vision, speech recognition, natural language processing, and voice/signal processing.

Recently, attempts to integrate AI with a wireless communication system have appeared, but this has been concentrated in the field of wireless resource management and allocation in the application layer, network layer, in particular, deep learning. However, such research is gradually developing into the MAC layer and the physical layer, and in particular, attempts to combine deep learning with wireless transmission in the physical layer have appeared. The AI-based physical layer transmission refers to applying a signal processing and communication mechanism based on an AI driver, rather than a traditional communication framework in the fundamental signal processing and communication mechanism. For example, deep learning-based channel coding and decoding, deep learning-based signal estimation and detection, deep learning-based MIMO mechanism, AI-based resource scheduling and allocation, and the like, may be included.

Terahertz (THz) Communication

A data transfer rate can be increased by increasing the bandwidth. This can be performed by using sub-TH communication as a wide bandwidth and applying advanced massive MIMO technology. THz waves, which are known as sub-millimeter radiation, generally indicate a frequency band between 0.1 THz and 10 THz with the corresponding wavelengths in the range of 0.03 mm-3 mm. A band range of 100 GHz to 300 GHz (sub THz band) is regarded as a main part of the THz band for cellular communication. When the sub-THz band is added to the mmWave band, the 6G cellular communication capacity increases. 300 GHz-3 THz among the defined THz band is in a far infrared (IR) frequency band. Although the 300 GHz-3 THz band is part of the optical band, it is at the border of the optical band and is immediately after the RF band. Therefore, this 300 GHz-3 THz band shows similarity with RF.

**Detailed Description of Various Embodiments of Present Disclosure**

Hereinafter, various embodiments of the present disclosure will be described in more detail.

The present disclosure relates to an apparatus and a method for performing a background knowledge update based on a semantic representation in a semantic communication.

Symbols/abbreviations/terms used in the present disclosure are as follows.

- AI : Artificial Intelligence
- ML : Machine Learning
- NN : Neural Network
- DNN : Deep Neural Network
- GNN : Graph Neural Network
- MLP : Multi-Layer Perceptron
- NCE : Noise Contrastive Estimation

**Background art of various embodiments of present disclosure**

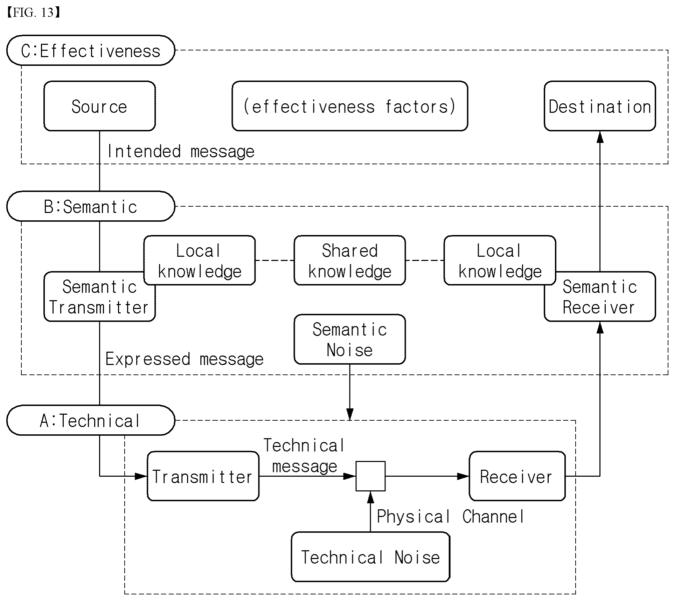

FIG. 13 is a diagram illustrating an example of communication models of three levels related to semantic communication in a system applicable to the present disclosure.

Shannon and Weaver propose that there are problems related to communication at three levels (References: [3] SHANNON, C. E. A mathematical theory of communication. Bell System Technical Journal 27 (1948), 379-423, 625-56. [4] WEAVER, W. The Mathematical Theory of Communication. 1949, ch. Recent Contributions to the Mathematical Theory of Communication).

(1) Level A: How accurately may symbols in communication be delivered? (Technical problem)
(2) Level B: How accurately do the delivered symbols deliver a desired meaning? (Semantic problem)
(3) Level C: How effectively does the received meaning affect an operation in a desired scheme? (Effectiveness problem)

While a Shannon's information theory focuses only on level A and therefore does not consider communication from a semantic point of view, Weaver explains that the Shannon's information theory is general enough to extend to consider levels B and C, such as adding "semantic transmitter", "semantic receiver", and "semantic noise" to a Shannon's communication model. FIG. 13 is an overall view illustrating such a content.

In 6G communication, it is one of various goals to enable various new services for interconnecting people and machines with various levels of intelligence, so it is necessary to consider semantic problems instead of considering only existing technical problems.

With respect to communication between people, word information is related to a corresponding "meaning" when exchanging information, and when this is related to a figure of FIG. 13, it can be seen that correct semantic communication occurs when a concept related to a message sent by a source is properly interpreted at a destination.

In this regard, instead of an existing purpose of reducing reconstruction errors that occur in a process of restoring the semantic representation received by the destination back to original raw data when generating and delivering the semantic representation by the source using the raw data given to or collected by the source, an approach is required to whether a downstream task, which is a task performed by the destination, being operated well (i.e., whether interpretation/reasoning is performed well) according to an intention delivered by the source using the received semantic representation, and the background knowledge included in the data delivered by the source should be reflected in the background knowledge of the destination so that an interpretation result may be obtained by operating using the background knowledge held by the destination when performing a reasoning operation by the destination.

As described above, the semantic representation generated by the source and delivered to the destination needs to be generated in consideration of the downstream task operating at the destination, and thus requires a task-oriented semantic communication system, which allows task-relevant information to be preserved while introducing useful invariance to the downstream task.

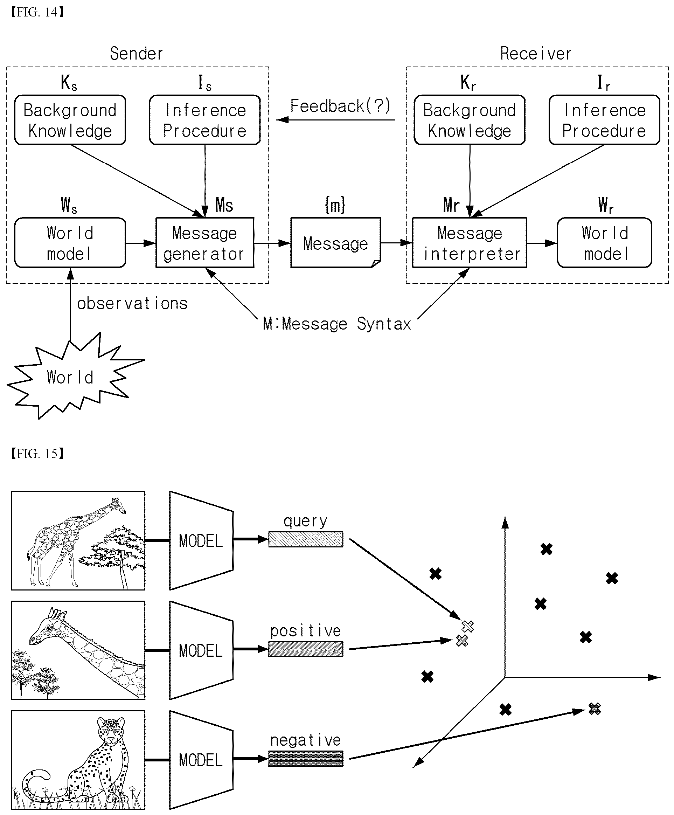

FIG. 14 is a diagram illustrating an example of a source and a destination of semantic information in the system applicable to the present disclosure.

FIG. 14 illustrates a feature of semantic communication, which is level B of FIG. 13. Message x delivered from the source to the destination is defined as follows.

Shannon entropy H(W) of world model W is shown in Equation 1, and is called a model entropy of a semantic source.

[Equation 1]

$$H(W) = - \sum_{w \in W} \mu(w) \log_2 \mu(w)$$

When world model $W_s$ is a set of interpretation in which a probability distribution is $\mu, \mu(w)$ is a model distribution, and $W_x$ is set of its models for a corresponding model $W_s$ in which $x$ is "true", a local probability $m(x)$ of message x is shown in Equation 2.

($\models$ is the usual propositional satisfaction relation / symbol $\models$ is also called 'accompanied' or 'modeled', and this semantically means "accompanied by a following result" or "a stronger condition". The symbol reveals an association from a semantic point of view).

[Equation 2]

$$m(x) = \frac{\mu(W_x)}{\mu(W)} = \frac{\sum_{w \in W, w \models x} \mu(w)}{\sum_{w \in W} \mu(w)}$$

Semantic entropy $H_s(x)$ of entropy information x proposes entropy information for a probability that information will be "true", and is shown in Equation 3.

[Equation 3]

$$H_s(x) = - \log_2(m(x))$$

In this case, when background knowledge K is considered, a set of possible worlds in Equations 2 and 3 are limited to a set which is compatible with K. Therefore, the set of possible worlds are represented as a conditional logical probability as in Equations 4 and 5.

[Equation 4]

$$m(x|K) = \frac{\mu(W_x)}{\mu(W)} = \frac{\sum_{w \in W, w \models K, x} \mu(w)}{\sum_{w \in W, w \models K} \mu(w)}$$

[Equation 5]

$$H_s(x|K) = - \log_2(m(x|K))$$

For example, $p$ is referred to as statistical probabilities, and it is assumed that a truth table in which the background knowledge is $K$ is given as in Table 2. Table 2 shows a truth table with $p(A) = p(B) = 0.5$ and $K = \{A \rightarrow B\}$.

[Table 2]

| # | A | B | A → B | probability |
|---|---|---|-------|-------------|
| 1 | 0 | 0 | 1 | 0.25 |
| 2 | 0 | 1 | 1 | 0.25 |
| 3 | 1 | 0 | 0 | 0.25 |
| 4 | 1 | 1 | 1 | 0.25 |

Then, the possible worlds are reduced to a series of truth assignments in which $A \rightarrow B$ is true (i.e. Cases 1, 2, and 4). Thus, conditional logical probabilities may be obtained as in Equations 6, 7, and 8.

[Equation 6]

$$m(A|K) = 1/3$$

[Equation 7]

$$m(B|K) = 2/3$$

[Equation 8]

$$m(A \wedge B) = 1/3$$

Since logical probabilities have a background knowledge, the local probabilities differ from priori statistical probabilities, and in a new distribution, $A$ and $B$ are no longer logically independent of each other (as $m(A|K)m(B|K) \neq m(A \wedge B|K)$).

When background knowledge $K$ is present, if $\mu'$ is a new distribution of a set of models, $\mu'$ is shown as in Equations 9 and 10.

[Equation 9]

$$\mu' = \frac{\mu(w)}{\sum_{v \in W, v \models K} \mu(v)}$$

[Equation 10]

$$H(W|K) = \sum_{w \in W, w \models K} \mu'(w) \log_2(\mu'(w))$$

In a corresponding example, the background knowledge is not considered, or model entropies of a considered source are as in Equations 11 and 12 below.

[Equation 11]

$$H(W) = -4 * 0.25 \log_2(0.25) = 2$$

[Equation 12]

$$H(W|K) = -3 * 1/3 \log_2\left(\frac{1}{3}\right) = 1.585$$

As in Equations 11 and 12, presence of a shared background knowledge shows that a message to be delivered at the source may be compressed without losing information, and communication may be performed with a shorter message to obtain information of the source as much as possible with a help of shared background knowledge. As such, it can be seen that one of the main reasons why communication at a semantic level may provide capability enhancement in relation to an existing technical level is because the background knowledge is considered.

As such, when generating and delivering a semantic feature in consideration of the downstream task located at the destination mentioned above, it can be seen that utilizing the background knowledge is consistent with a purpose of performing semantic communication.

In order to perform semantic communication including all of the above-described components, a new layer called a semantic layer that takes charge of overall operations for semantic data and messages may be added, and semantic layers may be located at the source and the destination by reflecting a task-oriented semantic communication system. In order to perform communication between the semantic layers located at the source and the destination, a protocol that is a protocol between layers and a series of operation processes need to be defined.

AI/ML technology may be applied and used to construct a task-oriented semantic communication system configured in a semantic layer which may be newly defined. In this case, considering an actual environment in which the corresponding system operates, raw data given or collected at the source is unlabeled data without labels in the majority. Since additional large cost is required for performing labeling for such un-labeled data requires, a technique that may well learn a representation for given data while using the un-labeled data should be introduced. In order to solve a problem that may occur due to such a lack of the labeled data, it is necessary to generate a good representation using information that may be obtained from the unlabeled data itself, and to introduce a necessary AI/ML technology for a purposeful operation of the downstream task located at the destination.

FIG. 15 is a diagram illustrating an example of a contrastive learning operation in the system applicable to the present disclosure.

Contrastive learning is used as a method for obtaining a rich representation through a correlation of data itself through a process of learning a representation space (embedding space) in which similar sample pairs (positive pair, query (anchor) and positive in FIG. 15) are kept close to each other, while non-similar sample pairs (negative pair, query (anchor) and negative in FIG. 15), are far away from each other. For example, when a target task is referred to as a classification task and a data modality of an input is an image, representations of images of a same giraffe may be located to be close to each other as in FIG. 15, and only when a giraffe and a cheetah are located at long distances from each other, a boundary may be well discriminated. The learning technique may be applied to both supervised setting and unsupervised setting, and in particular, the contrastive learning is one of the most powerful approaches in self-supervised learning when learning is performed using unsupervised data without labeled data, so it can be seen that the learning technique is suitable for application to a real environment in which un-labeled data occupies a large number.

In order to determine the contrastive learning, it is necessary to understand the following concepts.

(1) Instance Discrimination

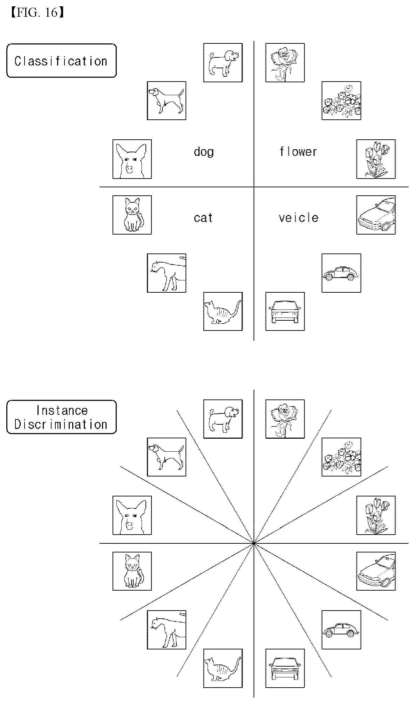

FIG. 16 is a diagram illustrating an example of instance discrimination in the system applicable to the present disclosure.

- Instance means each data sample to be trained (e.g., an image of a specific size, a sentence-unit text). When all instances in all data sets are considered as respective classes and there are N instances, N classifications are performed. By learning to discriminate instances based on a similarity between instances, it is possible to obtain a good representation that may represent all data sets without label information. When the downstream task is performed with the representation learned in this way, a result as good as supervised learning may be obtained, and the corresponding content has been proved using the data modality as an image.

(2) Noise Contrastive Estimation

N classifications are performed for N data samples because the instance discrimination is performed. However, for example, when a number of data samples is 10 million, 10 million classification need to be performed. As such, as the number of data samples, N becomes very large, a denominator in SoftMax calculation for probability calculation to perform the N classifications becomes large, so that a probability value becomes too small, which causes a problem that learning is difficult. Appropriate approximation is therefore needed to solve this problem. With respect to such a problem, a Noise-Contrastive Estimation (NCE) scheme is used, which takes a hint from a word embedding study and turns a multi-class classification into a binary classification that determines whether images are data samples (positive samples) or noise samples (negative samples).

(3) Positive, Negative Samples

- N multi-classification problems are approximated to binary classification problems through NCE, and in this case, how to define the positive and negative samples is required. As one of the methods for defining the positive sample, a data augmentation method is used.

For example, a person may perceive an image of a dog as a dog regardless of rotating the image of the dog, cutting a part of the image, or changing a color of the image. Similarly, since both the image of the dog and an image obtained by transforming the image of the dog should be similar in terms of a representation, both are referred to as the positive samples, and all of the remaining images other than the both images are referred to as the negative samples.

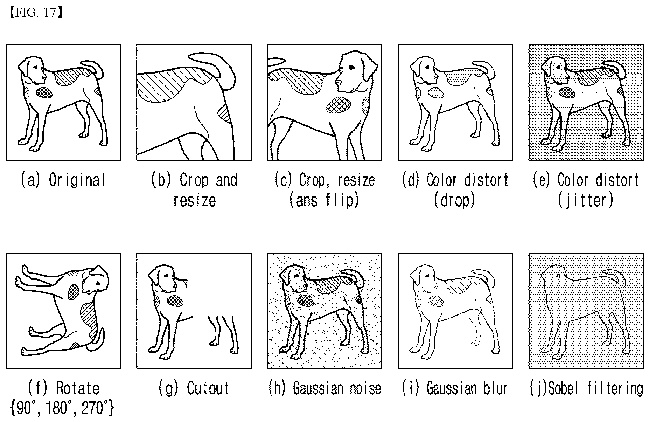

FIG. 17 is a diagram illustrating an example of data augmentation when a data modality is an image in the system applicable to the present disclosure.
In this contrastive learning, when $p_{data}$ is a distribution of sample data for $\mathbb{R}^n$ (real number set) (n represents a dimension), and $p_{pos}(\cdot,\cdot)$ is a distribution of positive pairs which may be obtained through data augmentation for $\mathbb{R}^n \times \mathbb{R}^n$, it is assumed that two distributions satisfy two properties in Equations 13 and 14.

[Equation 13]

$$\text{Symmetry: } \forall x, y, p_{pos}(x,y) = p_{pos}(y,x)$$

[Equation 14]

$$\text{Matching marginal: } \forall x, \int p_{pos}(x,y)dy = p_{data}(x)$$

(4) Contrastive loss function

- A loss indicating a process of learning and comparing representations while comparing given data so that positive samples are kept close to each other and negative samples are far away from each other is shown in forms of $p_{data}$ and $p_{pos}$ as in Equation 15.

[Equation 15]

$$\mathcal{L}_{contrastive}(f;\tau,M) \triangleq$$

$$\mathop{\mathbb{E}}_{\substack{(x,y)\sim p_{pos} \\ \{x_i^-\}_{i=1}^{M} \overset{i.i.d}{\sim} p_{data}}} \left[ -\log \left( \frac{e^{f(x)^\mathsf{T} f(y)/\tau}}{e^{f(x)^\mathsf{T} f(y)/\tau} + \sum_i e^{f(x_i^-)^\mathsf{T} f(y)/\tau}} \right) \right]$$

In Equation 15,

$$f : \mathbb{R}^n \to \mathcal{S}^{m-1}$$

represents an encoder that maps data to an m-dimensional $\ell_2$ -normalized feature vector, and a similarity between samples is measured through an inner product between vectors that pass through the encoder. $\tau > 0$ represents a scalar temperature hyper-parameter that determines how stricter to make a division (positive or negative)between classes, and $M \in \mathbf{Z_+}$ (positive integer set) represents a fixed number of negative samples.
A framework of overall contrastive learning may be seen as learning the encoder such that data similar to a reference data is mapped to a nearby place, and data that is not similar to the reference data is mapped to a distant place, as described above. When such contrastive learning and semantic communication are connected, it is desirable to combine the contrastive learning to the semantic communication, because when an operation in a real environment in which the above-mentioned unlabeled data occupies a large number is considered, a good representation may be learned using information from which the unlabeled data may be obtained, and a series of contents for delivery may be viewed as an AI/ML technology corresponding to an encoder corresponding to semantic source coding.

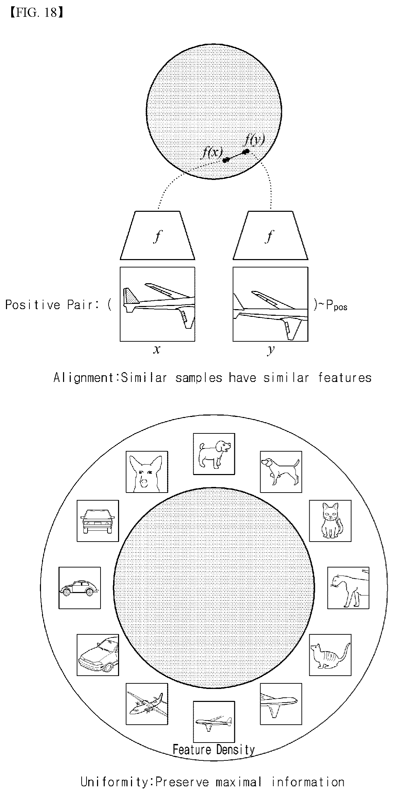

FIG. 18 is a diagram illustrating an example of alignment and uniformity of feature distribution on an output unit hypersphere in the system applicable to the present disclosure.

A semantic representation vector generated and delivered through signaling a framework in which such contrastive learning is applied to the semantic communication system, and a related procedure satisfies two following properties on the unit hypersphere.

Alignment: indicates that similar samples have a similar representation (feature). That is, the alignment represents a distance between paired instances, and the shorter the distance, the better.

Uniformity: It is also important that an embedding space is widely and evenly distributed on the unit hypersphere, so that each representation preserves its own meaning. Therefore, the corresponding property indicates how uniformly embedding for a random instance is distributed, and the more uniform, the better.

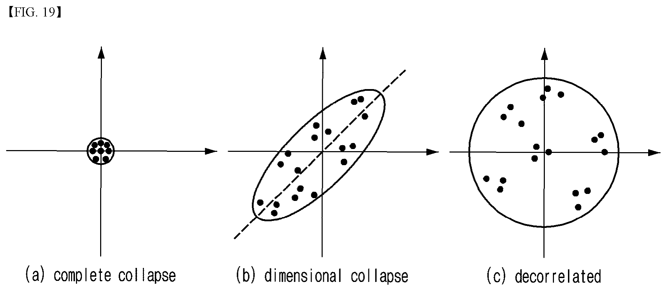

FIG. 19 is a diagram illustrating an example of a collapse pattern in the system applicable to the present disclosure.

The alignment and the uniformity which are two properties are mapped to a process of performing the contrastive learning for the semantic communication as follows.

Alignment: When performing the contrastive learning for the semantic communication, learning is performed to bring close to augmented data (positive pair) in a query (anchor) serving as a reference, so that the generated and delivered representation satisfies the corresponding property.

Uniformity: When performing the contrastive learning for the semantic communication, a generated and delivered representation satisfies a corresponding property because representations are uniformly distributed on the embedding space in a process of forcing the negative pair away from the positive pair. When non-contrastive learning that does not use the negative pair is introduced into the semantic communication, by using a framework in which a stop-gradient technique is applied to only one asymmetric structure and one path, (a) complete collapse and (b) dimension collapse in FIG. 19 are not generated, thereby satisfying the corresponding attribute.

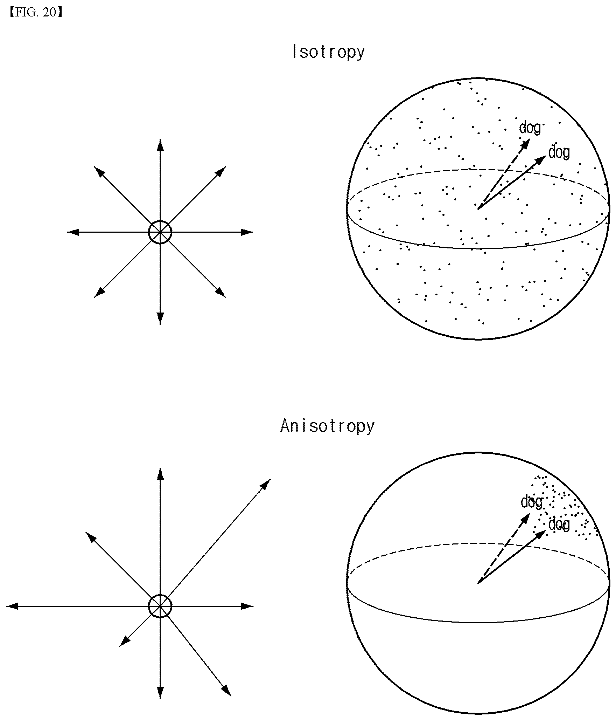

FIG. 20 is a diagram illustrating an example of distribution of vectors located on a unit hypersphere in the system applicable to the present disclosure.

According to the above description, it can be seen that semantic representation vectors generated and delivered, and obtained when the contrastive learning is introduced into the semantic communication may be isotropically distributed on the unit hypersphere.

Isotropy: When a specific vector is present, a vector space is evenly distributed.

Anisotropy: Vectors are distributed in a very narrow corn shape in the embedding space itself. Since all vectors are closely distributed regardless of a similarity of meanings of the corresponding vectors, a meaning of each vector may not be clearly discriminated.

The source and the destination may perform the semantic communication by changing roles of each other, and the semantic representation vectors mutually delivered between the source and the destination are generated and delivered by including respective background knowledge information while having the alignment and uniformity properties and distributions described in FIGS. 18 and 20. In this case, the semantic representation vector may be used as a unit for a background knowledge update. A relation needs to be configured between the semantic representation vector generated and delivered in such a situation, and an existing configured background knowledge to update the background knowledge, and a background knowledge sharing effect between the source and the destination may be obtained by performing the update.

However, when the background knowledge is examined in an existing semantic communication study, it can be confirmed that there is no actual operation related to the background knowledge even though the background knowledge is displayed in the framework, and there is no content for updating a background knowledge held.

Therefore, a semantic representation vector generated and delivered by satisfying alignment and uniformity on a unit hypersphere is regarded as a basic unit, and a procedure and signaling required for performing update through a relation configuration between the background knowledge and the delivered semantic representation vector are presented, so that it is necessary to specifically represent definitions of a series of protocols and operation processes for an inter-semantic layer operation.

## Configuration of Various Embodiments of Present Disclosure

The present disclosure proposes a protocol and a procedure of a semantic layer according to a related procedure for constructing a relation between a background knowledge and a semantic representation vector for a background knowledge update that satisfies two properties of alignment and uniformity on a unit hypersphere and previously holds a generated and delivered semantic representation vector, including an intention to be delivered in a system in which semantic communication can be performed.

In the corresponding operation, it is assumed that the background knowledge held between the source and the destination is configured in the form of a graph (hereinafter, referred to as a background knowledge graph), and a structure is considered in which a node (vertex) constituting the graph is configured as a semantic representation vector, and an edge indicating an inter-node relation has a weight. In such a structure, we aim to measure a degree between the semantic representation vector delivered to construct the relation and the vector corresponding to the node constituting the background knowledge graph, connect edges that are the relation based on the degree, and then perform a series of processes of granting weights to the corresponding edges.

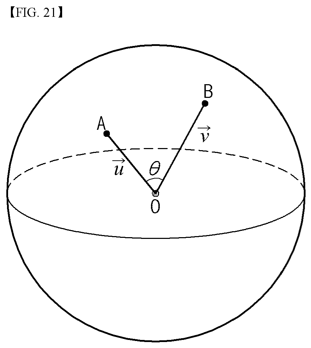

FIG. 21 is a diagram illustrating an example of a degree formed by two vectors on the unit hypersphere in the system applicable to the present disclosure.

A newly delivered semantic representation vector shown in FIG. 21 is $\vec{u}$, and one of node vectors represented with a point A on the unit hypersphere and constituting the background knowledge graph is , and represented with a point B on the unit hypersphere, a degree formed by two vectors may be easily obtained through an inverse function of a cosine function as shown in Equation 16.

[Equation 16]

$$\theta = \cos^{-1}\left(\frac{\vec{u} \cdot \vec{v}}{\|u\|\|v\|}\right)$$

In this case, degrees formed by a center point on the unit hypersphere, and the semantic representation vector and the node of the background knowledge graph may be considered to be proportional to a distance between the two vectors (the larger the degree between the two vectors, the larger the distance, and conversely, the smaller the degree between the two vectors, the smaller the distance.).

As described above, since the generated and delivered semantic representation vectors are placed on the unit hypersphere while satisfying the alignment and the uniformity, it can be seen that the background knowledge graph is also placed on the unit hypersphere, and the semantic representation vectors placed on the unit hypersphere are obtained through calculation of the loss function of Equation 15 based on a similarity by reflecting characteristics of raw data and the background knowledge. In this case, since confirming the degree between the semantic representation vectors is confirming the distance between the two, which is equivalent to measuring the similarity between the two, in conclusion, confirming the degree formed by the two vectors may be regarded as measuring the similarity between two vectors.

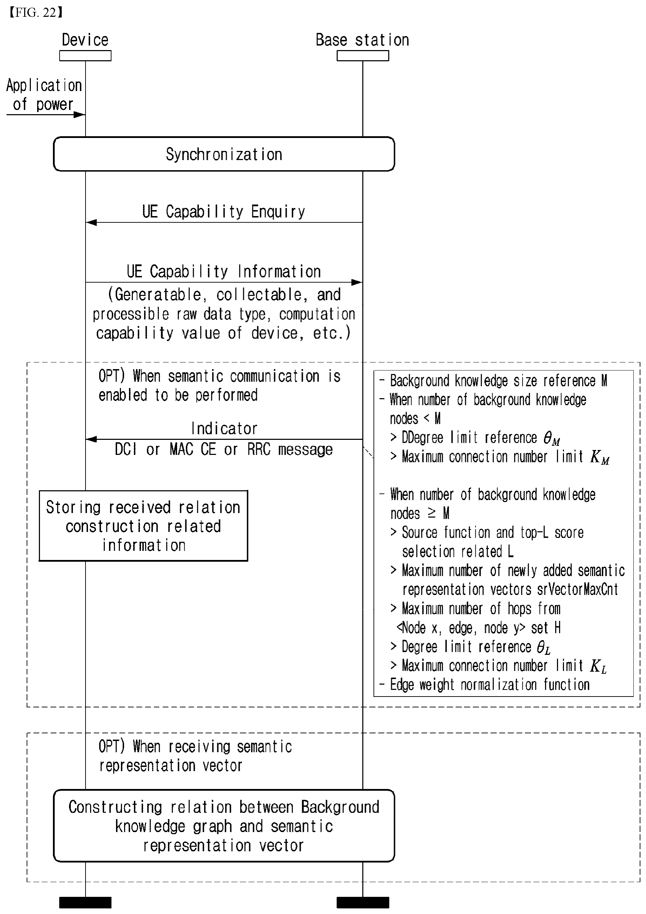

FIG. 22 is a diagram illustrating an example of a process of initializing related information for a semantic representation based background knowledge update in the system applicable to the present disclosure.

When a number of nodes constituting the current background knowledge graph is N, operation-related information for updating the background knowledge in the source and the destination is configured as in FIG. 22. The base station in FIG. 22 confirms a capability and delivers the corresponding information, and the apparatus and the base station have a same value with respect to the delivered information. A description of the corresponding information is as follows.

(1) Size-related (number of nodes in the graph) reference in background knowledge graph, **M**
The corresponding reference is a reference for determining a situation in which there are few nodes for configuring the background knowledge in the beginning and a case where the background knowledge starts to be equipped to some extent.
(2) Case where the number of nodes in the background knowledge graph is smaller than M (i.e., when N < M)

(2-1) Degree limit reference $\theta_M$

As described above, since the degree formed by the two vectors is equivalent to measuring the similarity, the degree is limited to $\theta_M$ for a connection between a semantic representation vector corresponding to a specific similarity or more and the node of the background knowledge graph.

(2-2) Maximum connection number limit $K_M$

Since a complexity problem related to construction of the background knowledge graph may occur when a relation between all nodes satisfying the degree limit condition of (2-1) and the delivered semantic representation vector is constructed, a number of edges connected from the delivered semantic representation vector is limited in order to control the complexity problem. For example, connections of a set number equal to or less than a maximum of $K_M$ may be selected in an order of a smaller degree among node vectors of the background knowledge graph in which the degree formed by the delivered semantic representation vector and the node vector of the background knowledge graph is smaller than $\theta_M$.

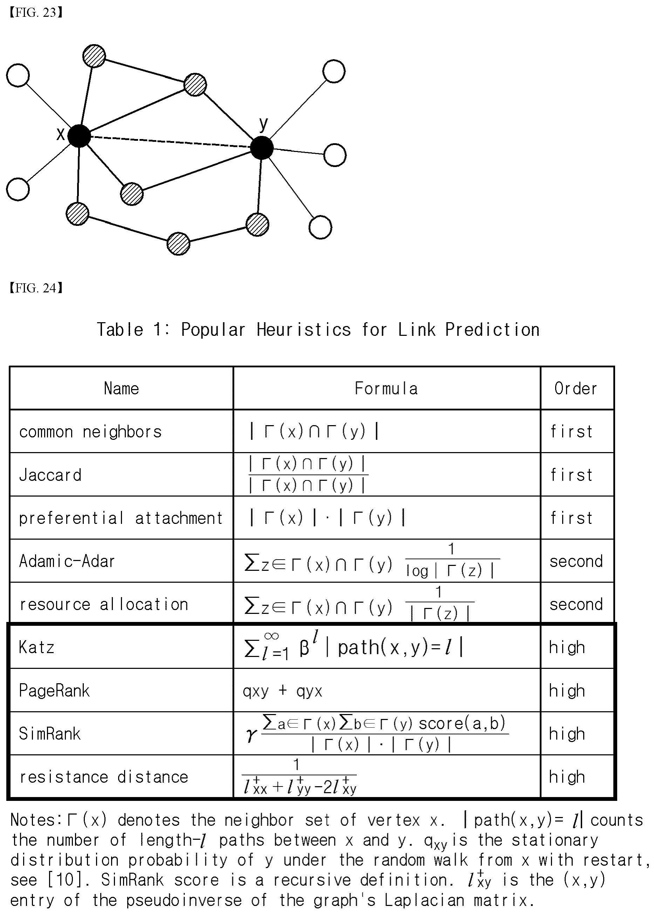

FIG. 23 is a diagram illustrating an example of a set corresponding to a node pair and an edge to which a score function is applied in the system applicable to the present disclosure.

The process of FIG. 22 will be subsequently described.

(3) Case where the number of nodes in the background knowledge graph is equal to or larger than M (i.e., when N $\geq$ M)

(3-1) Score function and top-L score selection related L

When the number of nodes of the currently constructed background knowledge graph is equal to or larger than set M, it is considered that the size of the background knowledge graph is sufficiently large, and in order to reduce a computational complexity for searching for a number of nodes constituting a specific degree with the semantic representation vector delivered in the corresponding situation, some of sets constituted by node pairs and edges connecting the node pairs are selected as a representative, and used to confirm whether a relation with a node belonging to the corresponding set is constructed.

In this case, a function to set a score value is selected to select representative sets to calculate scores of nodes x and y with respect to a set (i.e., <node x, edge, node y>) constituted by any node x and node y (however, x $\neq$ y) located in the background knowledge graph, and an edge connecting the nodes.

In this case, one of various heuristic methods may be used, and a representative heuristic method is illustrated in FIG. 24.

FIG. 24 is a diagram illustrating an example of a representative heuristic method usable for the score function in the system applicable to the present disclosure.

As shown in FIG. 24, among various heuristic methods considering an entire network structure, Katz index, rooted PageRank, SimRank, and the like using high-order heuristics (graph structure feature) considering the entire network structure corresponding may be considered, and the corresponding heuristics are proved according to the high-order heuristic type by using a γ-decaying heuristic theory, and learn a high-order graph structure from sub-graphs extracted with a small number of hops to have an amount of information as much to reflect information of an entire network.

Therefore, a <node x, edge, node y> set consisting of any nodes x and y, and edges between nodes is ranked based on a score obtained through a set score function, and then top-L is selected.

The process of FIG. 22 will be subsequently described.

(3-2) Number H of hops from a set consisting of any pair of nodes and edges between nodes

In the top-L sets selected, H is used to determine how far away neighboring nodes from each node are to be utilized for constructing a relation with the delivered semantic representation vector. According to the γ-decaying heuristic theory, since it is possible to set the number of hops to a small number, a sub-graph including a node vector capable of constructing a relation with a finally delivered semantic representation vector, including nodes located up to the H-hop in a set selected according to the set H-hop, is selected. H means a maximum number of hops.

(3-3) Maximum number of newly added semantic representation vectors, srVectorMaxCnt

srVectorMaxCnt represents a reference point for re-selecting a representative sub-graph.

When a value for counting the number of generated and delivered semantic representation vectors is recvSrVectorCnt, background knowledge update continues to confirm whether **recvSrVectorCnt $\geq$ srVectrMaxCnt**, and when a corresponding condition is satisfied, recvSrVectorCnt is initialized to 1, and then processes 1) to 3) are re-performed, which generate a final representative sub-graph, including 1) a score function operation based on a background knowledge graph updated up to now, 2) setting top-L <node x, edge, node y> sets, and 3) nodes up to the H-hop in a representative set for re-selecting the representative sub-graph.

(3-4) Degree limit reference $\theta_L$

By considering that the number of nodes of the background knowledge graph is equal to or larger than predefined M, it can be seen that a large number of semantic representation vectors that satisfy the uniformity property are evenly distributed on the unit hypersphere, and in this case, it can be seen that a size of the graph is increased in a form in which the background knowledge graph is evenly distributed on the unit hypersphere.

In this case, when a node is selected in which a degree formed by the delivered semantic representation vector and the node of the background knowledge graph is smaller than $\theta_M$ by using an existing set degree limit reference $\theta_M$, a relation may occur with a background knowledge graph node whose distance is far based on the semantic representation vector, and a fact that the distance is far means that a similarity between the two vectors is small, and thus such a situation needs to be limited.

Therefore, when the degree is limited for a connection between a semantic representation vector corresponding to a specific similarity or larger and the node of the background knowledge graph, $\theta_L$ is set to a smaller value than $\theta_M$ which is the degree limit reference set when a number of nodes of the current background knowledge graph is smaller than $M$ (i.e., $\theta_L < \theta_M$).

(3-5) Maximum connection number limit $K_L$

A number of edges with which node vectors of the background knowledge graph in which degrees formed by the delivered semantic representation vector, and the node vectors belonging to the sub-graphs selected through (3-1) and (3-2) are smaller than $\theta_L$ construct a relation is limited to a maximum $K_L$ of to be used for controlling a complexity of the background knowledge graph.

In this case, $K_L$ may be set to a smaller value than a maximum connection number limit $K_M$ set when the number of nodes in the current background knowledge graph is smaller than $M$ (i.e., $K_L < K_M$).

In addition, in a state in which the size of the graph of the background knowledge is increased in an evenly distributed form on the unit hypersphere, relations for semantic representation vectors delivered during a predetermined period are continuously constructed if conditions are met in sub-graphs in which a selected <node x, edge, node y> set and nodes away from the corresponding set by H hops are representatively selected and constructed, so that the number of relations may be increased based on nodes of a background knowledge graph corresponding to the representative set, and it is thus necessary to limit such a situation.

Therefore, by setting a value smaller than the existing set maximum connection number limit $K_M$, the complexity of the background knowledge graph which constructs the relation with the finally delivered semantic representation vector is reduced.

(4) Edge weight normalization function

The edge weight normalization function serves to make a weight sum be 1 based on the degrees formed by the semantic representation vector and the node vectors in the background knowledge graph after the relations between the delivered semantic representation vector and the node vectors in the background knowledge graph are constructed. In this case, by reflecting that the smaller the degree between two vectors, the higher the similarity between the two vectors, the corresponding function is set so that the smaller the degree, the higher weight the relation may have among the relations.

Some steps shown in FIG. 22 may be omitted depending on a situation and/or a configuration.

The following description of operations shows a procedure related to constructing the relation between the background knowledge graph and the semantic representation vector.

First, a procedure is confirmed for a situation (i.e., $N<M$) in which a number of nodes constituting the current background knowledge graph, N is smaller than a set size related (the number of nodes in the graph) reference M of the background knowledge graph.

A degree between a first delivered semantic representation vector and the node vector constituting the background knowledge is confirmed. The degree between the two vectors is described as in the embodiment of FIG. 21, and may be obtained by using an inner product of two vectors and a size of each vector as in Equation 16.

Then, it is confirmed whether a degree between a second semantic representation vector and the background knowledge graph node vector is smaller than a set degree limit reference $\theta_M$. As described above, measuring the degree between two vectors located on the unit hypersphere is the same as measuring the similarity between the two vectors.

Next, third, an operation is performed which connects a maximum of $K_M$ edges between the semantic representation vector and node candidates in the background knowledge graph, which may be connected to the semantic representation vector in the background knowledge graph by confirming the maximum connection number limit $K_M$. When a number of relations (edges) which may be newly generated between the semantic representation vector and the background knowledge graph exceeds $K_M$, a connection is performed by selecting top-$K_M$ nodes in an order in which a degree formed with the semantic representation vector among selected node candidates is small.

Last, an operation of granting weights to edges connected to the semantic representation vector and the node vectors in the background knowledge graph is performed. In this case, normalization is performed so that a total weight sum may become 1 according to each degree between the semantic representation vector and the connected node vector in the background knowledge graph. The corresponding normalization is performed by using a set edge weight normalization function.

An example of the corresponding process is as follows. For example, as illustrated in FIG. 13, it can be seen that a degree between a new semantic representation vector and each node constituting the existing background knowledge graph is measured. In this case, $\theta_M = 55°$ and $K_M = 4$ are set, and the edge weight normalization function is set as in Equation 17.

[Equation 17]

$$weight_{(sr, i)} = \frac{\ln\left(1/\Phi\left(\frac{deg_{(sr, i)}}{K}\right)\right)}{\sum_{j=1}^{K} \ln\left(1/\Phi\left(\frac{deg_{(sr, j)}}{K}\right)\right)}$$

In Equation 17, $weight_{(sr,i)}$ represents a weight of an edge formed between a semantic representation vector **sr** and a background knowledge graph node **i**, and $deg_{(sr,i)}$ means a degree formed by the semantic representation vector and a vector of the background knowledge graph node **i**. In this case, $i \in S^N$ is satisfied, and $S^N$ represents a set of $K_M$ finally selected nodes among nodes forming a smaller degree than $\theta_M$. **K** means a number of finally constructed relations, and $\Phi$ ($\cdot$) represents a CDF of a normal distribution with a mean of 0 and a standard deviation of 10.

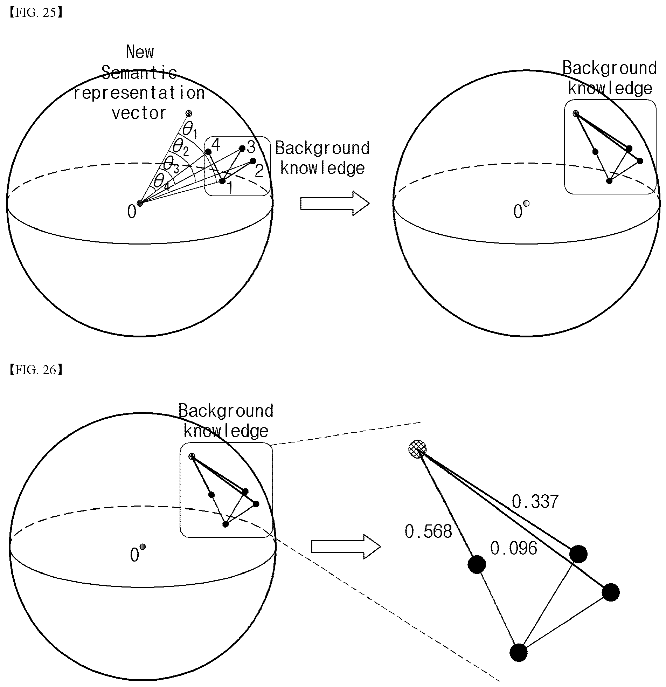

FIG. 25 is a diagram illustrating an example of relation construction according to degrees formed by a delivered semantic representation vector and background knowledge graph node vectors in the system applicable to the present disclosure.

In a left figure of FIG. 25, when $\theta_1 = 60°$, $\theta_2 = 50°$, $\theta_3 = 30°$, and $\theta_4 = 20°$ are measured, $\theta_4 < \theta_3 < \theta_2 < \theta_M < \theta_1$, so nodes 2, 3, and 4 other than node 1 in the background knowledge graph of FIG. 13 become candidate which may construct relations with a delivered semantic representation vector.

Thereafter, since it is confirmed that a total number of relations constructed between the semantic representation vector, and nodes 2, 3, and 4 which are the node candidates in the background knowledge graph which may construct the relations with the semantic representation vector is three, and it can be seen that the total number is smaller than the maximum connection number limit $K_M = 4$, the relations between the semantic representation vector and nodes 2, 3, and 4 in the background knowledge graph are constructed as illustrated in a right figure of FIG. 25.

FIG. 26 is a diagram illustrating an example of granting a weight to a relation (edge) constructed with the semantic representation vector in the system applicable to the present disclosure.

Last, as illustrated in FIG. 26, a task of granting a weight to a relation (edge) constructed with a delivered semantic representation vector is performed.

When the edge weight normalization function is given as in Equation 17, a weight of an edge connected between a semantic representation and node 4 is calculated as in Equation 18.

[Equation 18]

$$\frac{\ln\left(1/\Phi\left(\frac{20}{3}\right)\right)}{\ln\left(1/\Phi\left(\frac{20}{3}\right)\right) + \ln\left(1/\Phi\left(\frac{30}{3}\right)\right) + \ln\left(1/\Phi\left(\frac{50}{3}\right)\right)} \fallingdotseq \frac{0.291}{0.291 + 0.173 + 0.049}$$

$$\fallingdotseq 0.568$$

In the same scheme, when weights of edges connected between the semantic representation and nodes 2 and 3 are calculated, the weights become 0.096 and 0.337 and the weights are assigned as in FIG. 26.

Next, a procedure is confirmed for a case (i.e., $N \geq M$) in which a number of nodes constituting the current background knowledge graph, N is equal to or larger than a set size related (the number of nodes in the graph) reference M of the background knowledge graph.

First, a counter (e.g., recvSrVectorCnt) is set to 1 which counts a number of semantic representation vectors generated and delivered at a time point when the corresponding process is first performed, scores for the sets constituted by <node x, edge, node y> are calculated as in the embodiments of FIGS. 22 and 23 in the graph by using the score function set in the background knowledge graph, and then L sets corresponding to the top-L score are selected. The set is then constructed by including nodes located within the H hop set in the selected set. The vectors of the node belonging to the node belonging to each sub-graph finally generated may become candidates which may construct a relation with the delivered semantic representation vector.

Thereafter, it is confirmed whether degrees between the semantic representation vector and node vectors of sub-graphs finally selected in the background knowledge graph are smaller than a set degree limit reference $\theta_L$, and nodes which form a smaller degree than $\theta_L$ are selected as relation construction candidates.

Next, an operation is performed which connects a maximum of $K_L$ edges between the semantic representation vector and node candidates in the background knowledge graph, which may be connected to the semantic representation vector in the background knowledge graph by confirming the maximum connection number limit $K_L$. When a number of relations (edges) which may be newly generated between the semantic representation vector and the background knowledge graph exceeds $K_L$, a connection is performed by selecting **top-$K_L$** nodes in an order in which a degree formed with the semantic representation vector among selected node candidates is small.

Last, an operation of granting weights to edges connected to the semantic representation vector and the node vectors in the background knowledge graph is finally performed. In this case, normalization is performed so that a total weight sum may become 1 according to each degree between the semantic representation vector and the node vector in the connected background knowledge graph. The corresponding normalization is performed by using a set edge weight normalization function.

When the semantic representation vector is received in a next round, a counter (e.g., recvSrVectorCnt) that counts the number of semantic representation vectors is increased by 1, and then it is confirmed whether the counter is equal to or larger than a set maximum counter value (srVectorMaxCnt) (e.g. **recvSrVectorCnt ≥ srVectorMaxCnt)**, and when a corresponding condition is satisfied, recvSrVectorCnt is initialized to 1, and then a series of processes for re-selecting a representative sub-graph is re-performed to construct relations between newly selected sub-graphs and the delivered semantic representation vector. However, when the condition of recvSrVectorCnt ≥ srVectorMaxCnt is not satisfied, only the value is increased by 1, and in a remaining process, a task of constructing the relation with the delivered semantic representation vector by using the existing selected sub-graphs is performed.

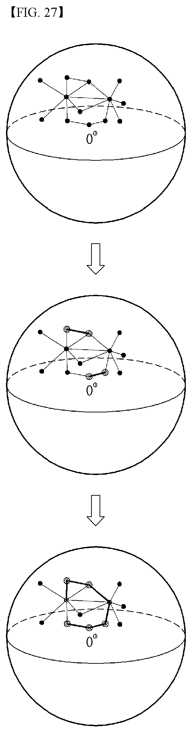

FIG. 27 is a diagram illustrating an example of a sub-graph extraction process for selecting a relation construction candidate from a background knowledge graph in the system applicable to the present disclosure.

An example of the corresponding process is as follows. For example, the background knowledge graph is located on the unit hypersphere (**N** = 13 a left figure of FIG. 15) as in FIG. 15, and **Mn= 13, the** score function is a page rank (see FIG. 24 for an equation), **L = 2** for selecting the top-L score, **H = 1** of H-hop for up to how many hops are to be included, $\theta_L$ = **35°** , and **$K_M$ = 3,** and the edge weight normalization function starts in a state set as in Equation 17.

In this case, since the case where the number of nodes in the background knowledge graph is equal to or larger than M (i.e., **N ≥ M**) is first satisfied, a counter for confirming the number of generated and delivered semantic representation vectors is set to 1, and then a score for any <node x, edge, node y> set in the current background knowledge graph is calculated through a page rank algorithm which is the score function. Thereafter, top-L **(L = 2)** sets are selected (a central figure of FIG. 27), and a sub-graph is selected, which includes node vectors which may construct relations with the finally delivered semantic representation vector, including up to 1 hop in a set selected according to the set H-hop = 1 hop.

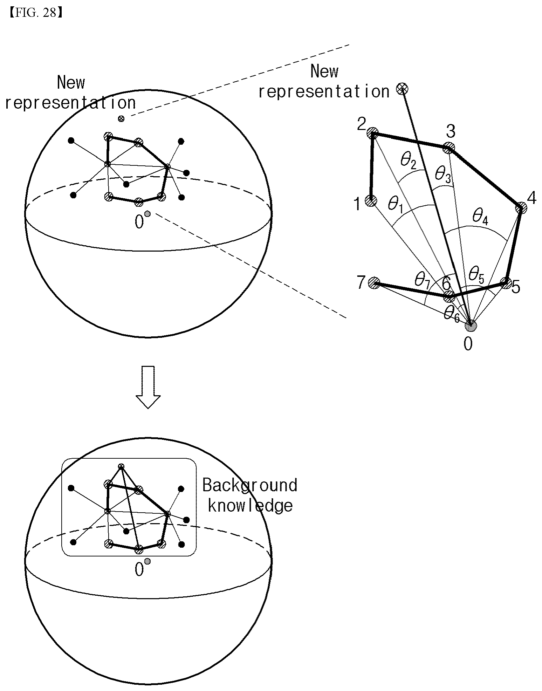

FIG. 28 is a diagram illustrating an example of relation construction according to degrees formed by the delivered semantic representation vector and the background knowledge graph node vectors in the system applicable to the present disclosure.

Then, when the semantic representation vector is delivered, an operation for constructing the relation with the background knowledge graph is performed. In FIG. 28, when $\theta_1$ = **32°**, $\theta_2$ = **25°**, $\theta_3$ = **10°**, $\theta_4$ = **34°**, $\theta_5$ = **50°**, $\theta_6$ = **18°** , and $\theta_7$ = **55°** are measured, $\theta_3 < \theta_6 < \theta_2 < \theta_1 < \theta_L < \theta_4 < \theta_5 < \theta_7$, so nodes 1, 2, 3, and 5 may be regarded as the relation construction candidates, but a maximum number which may construct the relation with the semantic representation vector, $K_L$ is 3, so three nodes are selected in a node order of forming a smaller degree to finally form relations between node 2, node 3, and node 6, and the delivered semantic representation vector.

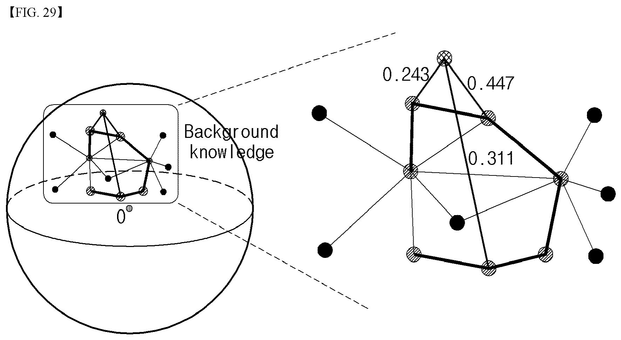

FIG. 29 is a diagram illustrating an example of granting a weight to a relation (edge) constructed with the semantic representation vector in the system applicable to the present disclosure.

Last, a task of granting the weight to the relation (edge) constructed with the delivered semantic representation vector is performed by using Equation 17 to finally grant the weight to the edge as in FIG. 29.

**Effects of Various Embodiments of Present Disclosure**

The present disclosure presents a procedure and signaling required for updating a semantic representation vector generated and delivered while satisfying alignment and uniformity properties through configuring a relation with a background knowledge in a system in which semantic communication is enabled to be performed. By specifically defining a series of protocols and operation processes for a semantic layer-to-layer operation for constructing a background knowledge graph through inter-unit relation formation and weighting, while setting the existing background knowledge construction as one unit for representing a semantic representation vector which deviates from a buffering form in the background knowledge graph, it is possible to easily perform reasoning for the delivered semantic representation vector using the background knowledge graphs held by the source and destination.

Key features of various embodiments of the present disclosure are as follows.

(1) Source and destination operations for updating background knowledge in semantic communication
(2) Operations of transmitting and receiving, by the source and the destination, information for updating through configuring a relation between a semantic representation vector and a background knowledge
(3) Operation of updating the background knowledge based on the background knowledge update related information
(4) The background knowledge update is performed based on an operation of a downstream task performed by the destination.

[Description related to first node claim]

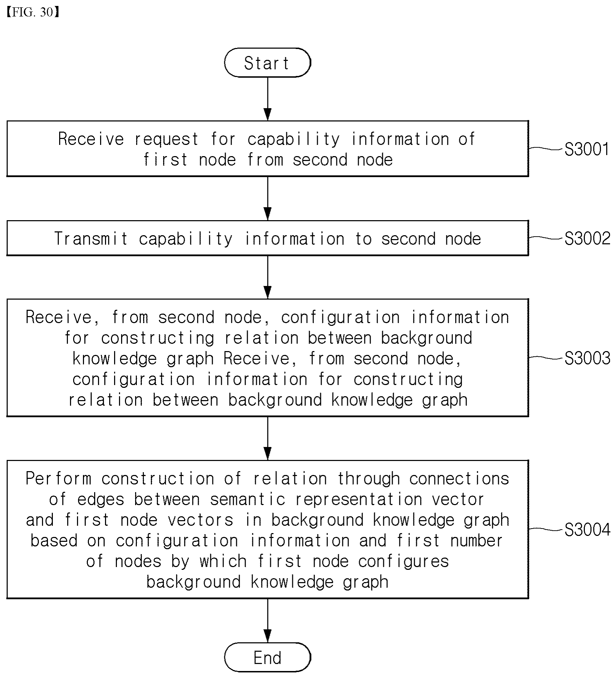

Hereinafter, the above-described embodiments will be described in detail with reference to FIG. 30 in terms of the operation of the first node. Methods to be described below are just distinguished for convenience and unless the methods mutually exclusive, it is needless to say that some components of any one method may be substituted with some components of another method or may be applied in combination with each other.

FIG. 30 is a diagram illustrating an example of an operation process of a first node in the system applicable to the present disclosure.

According to various embodiments of the present disclosure, a method performed by the first node in the communication system is provided.

According to various embodiments of the present disclosure, the first node and the second node may correspond to one of the UE or the base station in the wireless communication system.

The embodiment of FIG. 30 may further include, before step S3001, a step of receiving, by the first node, one or more synchronization signals from the second node; and a step of receiving, by the first node, system information from the second node. The embodiment of FIG. 30 may further include, before step S3001, a step of transmitting, by the first node, a random access preamble to the second node; and a step of receiving, by the first node, a random access response from the second node. The embodiment of FIG. 30 may further include, before step S3001, a step of receiving, by the first node, control information from the second node.

In step S3001, the first node receives, from the second node, a request for capability information of the first node.

In step S3002, the first node transmits the capability information to the second node.

In step S3003, the first node receives, from the second node, configuration information for constructing a relation between a background knowledge graph and a semantic representation vector based on the capability information, and the configuration information includes information about a second number that is a reference size of the background knowledge graph.

In step S3004, the first node performs construction of the relation through connections of edges between the semantic representation vector and first node vectors in the background knowledge graph based on the configuration information and a first number of nodes by which the first node configures the background knowledge graph. The first node vectors include a selected few of second node vectors configuring the background knowledge graph.

According to various embodiments of the present disclosure, a corresponding weight of weights determined based on an angle between each of the first node vectors and the semantic representation vector is applied to each of the edges.

According to various embodiments of the present disclosure, a total sum of the weights applied to the first node vectors, respectively may be set to 1.

According to various embodiments of the present disclosure, when the first number is smaller than the second number, the first node vectors may include a third number of second node vectors according to an order in which an angle formed with the semantic representation vector is small among the second node vectors in which the angle formed with the representation vector is less than a set first angle.

According to various embodiments of the present disclosure, when the first number is equal to or larger than the second number, the first node vectors may include second node vectors of a sixth number or less in which angles forming a set are less than a set second angle among second node vectors corresponding to hops of a fifth number or less from a fourth number of sets having a high score among sets of edges formed by two of the second node vectors based on a score function.

According to various embodiments of the present disclosure, when the first number is smaller than the second number, the first angle may be a maximum angle among the angles formed by the first node vectors and the semantic representation vector. When the first number is equal to or larger than the second number, the second angle may be the maximum angle among the angles formed by the first node vectors and the semantic representation vector. The second angle may be smaller than the first angle.

According to various embodiments of the present disclosure, an angle formed by each of the second node vectors and the semantic representation vector may be related to a similarity between each of the second node vectors and the semantic representation vector.

According to various embodiments of the present disclosure, an angle formed by each of the first node vectors and the semantic representation vector may be related to a similarity between each of the first node vectors and the semantic representation vector.

According to various embodiments of the present disclosure, there is provided a first node in a communication system. The first node may include a transceiver and at least one processor, and the at least one processor may be configured to perform the operation method of the first node based on FIG. 30.

According to various embodiments of the present disclosure, there is provided a device controlling a first node in a communication system. The device may include at least one processor and at least one memory operably connected to the at least one processor. The at least one memory may be configured to store instructions performing the operation method of the first node based on FIG. 30 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the first node based on FIG. 30.

[Description related to second node claim]

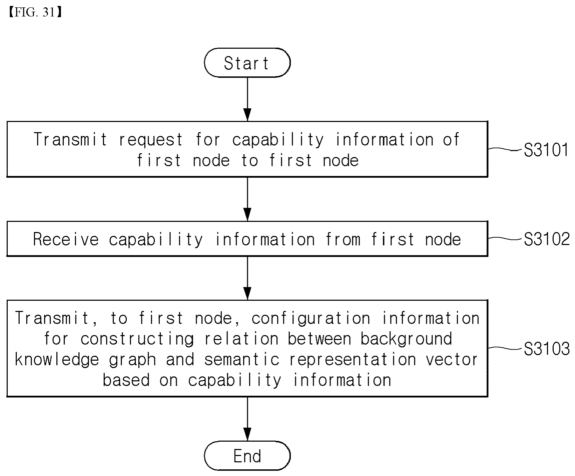

Hereinafter, the above-described embodiments will be described in detail with reference to FIG. 31 in terms of the operation of the second node. Methods to be described below are just distinguished for convenience and unless the methods mutually exclusive, it is needless to say that some components of any one method may be substituted with some components of another method or may be applied in combination with each other.

FIG. 31 is a diagram illustrating an example of an operation process of a second node in the system applicable to the present disclosure.

According to various embodiments of the present disclosure, a method performed by the second node in the communication system is provided.

According to various embodiments of the present disclosure, the first node and the second node may correspond to one of the UE or the base station in the wireless communication system.

The embodiment of FIG. 31 may further include, before step S3101, a step of transmitting, by the second node, one or more synchronization signals to the first node; and a step of transmitting, by the second node, system information to the first node. The embodiment of FIG. 31 may further include, before step S3101, a step of receiving, by the second node, a random access preamble from the first node; and a step of transmitting, by the second node, a random access response to the first node. The embodiment of FIG. 31 may further include, before step S3101, a step of transmitting, by the second node, control information to the first node.

In step S3101, the second node transmits, to the first node, a request for capability information of the first node.

In step S3102, the second node receives the capability information from the first node.

In step S3103, the second node transmits, to the first node, configuration information for constructing a relation between the background knowledge graph and a semantic representation vector based on the capability information. The configuration information includes information of a second number which is a reference size of a background knowledge graph. The relation between the background knowledge graph and the semantic representation vector may be constructed through connections of edges between the semantic representation vector and first node vectors in the background knowledge graph based on the configuration information and a first number of nodes that configure the background knowledge graph related to the first node. The first node vectors may include a selected few of second node vectors configuring the background knowledge graph.

According to various embodiments of the present disclosure, a corresponding weight of weights determined based on an angle between each of the first node vectors and the semantic representation vector is applied to each of the edges.

According to various embodiments of the present disclosure, a total sum of the weights applied to the first node vectors, respectively may be set to 1.

According to various embodiments of the present disclosure, when the first number is smaller than the second number, the first node vectors may include a third number of second node vectors according to an order in which an angle formed with the semantic representation vector is small among the second node vectors in which the angle formed with the representation vector is less than a set first angle.

According to various embodiments of the present disclosure, when the first number is equal to or larger than the second number, the first node vectors include second node vectors of a sixth number or less in which angles forming a set are less than a set second angle among second node vectors corresponding to hops of a fifth number or less from a fourth number of sets having a high score among sets of edges formed by two of the second node vectors based on a score function.

According to various embodiments of the present disclosure, when the first number is smaller than the second number, the first angle may be a maximum angle among the angles formed by the first node vectors and the semantic representation vector. When the first number is equal to or larger than the second number, the second angle may be the maximum angle among the angles formed by the first node vectors and the semantic representation vector. The second angle may be smaller than the first angle.

According to various embodiments of the present disclosure, an angle formed by each of the second node vectors and the semantic representation vector may be related to a similarity between each of the second node vectors and the semantic representation vector.

According to various embodiments of the present disclosure, an angle formed by each of the first node vectors and the semantic representation vector may be related to a similarity between each of the first node vectors and the semantic representation vector.

According to various embodiments of the present disclosure, there is provided a second node in a communication system. The second node may include a transceiver and at least one processor, and the at least one processor may be configured to perform the operation method of the second node based on FIG. 31.

According to various embodiments of the present disclosure, there is provided a device controlling a second node in a communication system. The device may include at least one processor and at least one memory operably connected to the at least one processor. The at least one memory may be configured to store instructions performing the operation method of the second node based on FIG. 31 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the second node based on FIG. 31.

Communication system applicable to the present disclosure

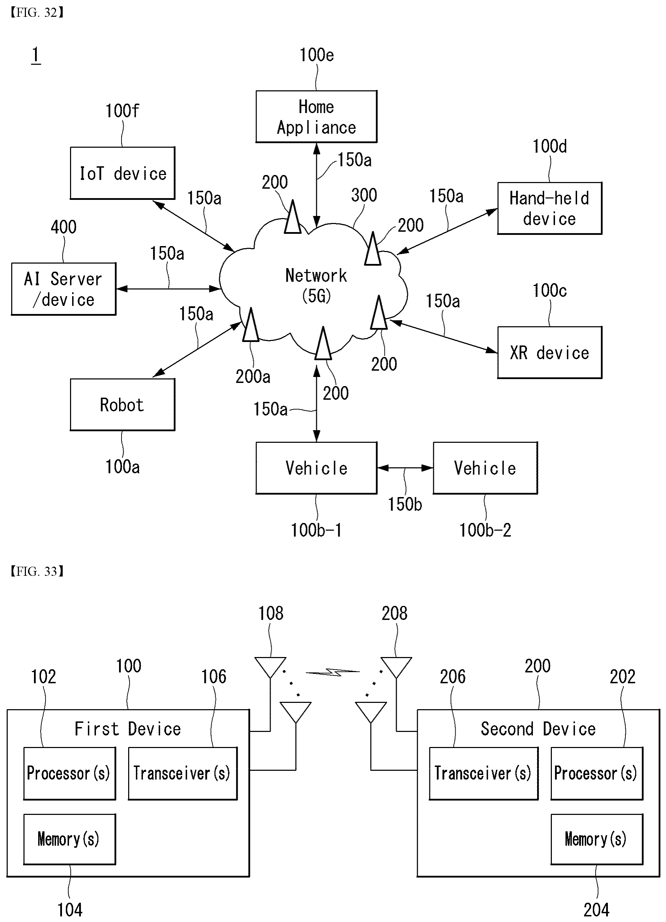

FIG. 32 illustrates a communication system 1 applied to various embodiments of the present disclosure.

Referring to FIG. 32, a communication system 1 applied to various embodiments of the present disclosure includes a wireless device, a base station, and a network. Herein, the wireless device refers to a device performing communication using Radio Access Technology (RAT) (e.g., 5G New RAT (NR)) or Long-Term Evolution (LTE), 6G wireless communication) and may be referred to as communication/radio/SG device/6G device. Although not limited thereto, the wireless devices may include a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BS and the network may be implemented as wireless devices and a specific wireless device 200a may operate as a BS/network node with respect to other wireless devices.

The wireless devices 100a to 100f may be connected to the network 300 via the BS 200. An Artificial Intelligence (AI) technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network, or 6G network. Although the wireless devices 100a to 100f may communicate with each other through the BS 200/network 300, the wireless devices 100a to 100f may perform direct communication (e.g., sidelink communication) with each other without passing through the BS/network. For example, the vehicles 100b-1 and 100b-2 may perform direct communication (e.g. Vehicle-to-Vehicle (V2V)/Vehicle-to-everything (V2X) communication). Additionally, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BS/the wireless device, the base station and the base station may transmit/receive radio signals to/from each other through the wireless communication/connections 150a, 150b, and 150c. For example, the wireless communication/connections 150a, 150b, and 150c may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

NR supports multiple numerology (or subcarrier spacing (SCS)) to support various 5G services. For example, when SCS is 15kHz, it supports a wide area in traditional cellular bands, and when SCS is 30kHz/60kHz, it supports dense-urban, lower latency, and wider carrier bandwidth, when SCS is 60kHz or higher, it supports bandwidth greater than 24.25GHz to overcome phase noise.

The NR frequency band can be defined as two types of frequency ranges (FR1, FR2). The values of the frequency range may be changed, for example, and the frequency ranges of the two types (FR1, FR2) may be as shown in Table 3 below. For convenience of explanation, among the frequency ranges used in the NR system, FR1 may mean "sub 6GHz range", and FR2 may mean "above 6GHz range" and may be called millimeter wave (mmW).

[Table 3]

| Frequency Range designation | Corresponding frequency range | Subcarrier Spacing |
|---|---|---|
| FR1 | 450MHz-6000MHz | 15, 30, 60kHz |
| FR2 | 24250MHz-52600MHz | 60, 120, 240kHz |

As described above, the numerical value of the frequency range of the NR system can be changed. For example, FR1 may include a band of 410 MHz to 7125 MHz as shown in Table 4 below. That is, FR1 may include a frequency band of 6GHz (or 5850, 5900, 5925 MHz, etc.). For example, the frequency band above 6 GHz (or 5850, 5900, 5925 MHz, etc.) included within FR1 may include an unlicensed band. Unlicensed bands can be used for a variety of purposes, for example, for communications for vehicles (e.g., autonomous driving).

[Table 4]

| Frequency Range designation | Corresponding frequency range | Subcarrier Spacing |
|---|---|---|
| FR1 | 41MHz-7125MHz | 15, 30, 60kHz |
| FR2 | 24250MHz-52600MHz | 60, 120, 240kHz |

Wireless device applicable to the present disclosure

Examples of a wireless device to which various embodiments of the present disclosure are applied are described below.

FIG. 33 illustrates a wireless device applicable to various embodiments of the present disclosure.

Referring to FIG. 33, a first wireless device 100 and a second wireless device 200 may transmit and receive radio signals through various wireless access technologies (e.g., LTE and NR). {The first wireless device 100 and the second wireless device 200} may correspond to {the wireless device 100x and the base station 200} and/or {the wireless device 100x and the wireless device 100x} of FIG. 32.

The first wireless device 100 may include one or more processors 102 and one or more memories 104 and may further include one or more transceivers 106 and/or one or more antennas 108. The processor 102 may control the memory 104 and/or the transceiver 106 and may be configured to implement the descriptions, functions, procedures, proposals, methods and/or operation flowcharts described in the present disclosure. For example, the processor 102 may process information within the memory 104 to generate first information/signal, and then transmit a radio signal including the first information/signal through the transceiver 106. Further, the processor 102 may receive a radio signal including second information/signal through the transceiver 106, and then store in the memory 104 information obtained from signal processing of the second information/signal. The memory 104 may be connected to the processor 102 and store various information related to an operation of the processor 102. For example, the memory 104 may store software codes including instructions for performing all or some of processes controlled by the processor 102 or performing the descriptions, functions, procedures, proposals, methods and/or operation flowcharts described in the present disclosure. The processor 102 and the memory 104 may be a part of a communication modem/circuit/chip designed to implement the wireless communication technology (e.g., LTE and NR). The transceiver 106 may be connected to the processor 102 and may transmit and/or receive the radio signals via one or more antennas 108. The transceiver 106 may include a transmitter and/or a receiver. The transceiver 106 may be used interchangeably with a radio frequency (RF) unit. In various embodiments of the present disclosure, the wireless device may mean the communication modem/circuit/chip.

The second wireless device 200 may include one or more processors 202 and one or more memories 204 and may further include one or more transceivers 206 and/or one or more antennas 208. The processor 202 may control the memory 204 and/or the transceiver 206 and may be configured to implement the descriptions, functions, procedures, proposals, methods and/or operation flowcharts described in the present disclosure. For example, the processor 202 may process information within the memory 204 to generate third information/signal and then transmit a radio signal including the third information/signal through the transceiver 206. Further, the processor 202 may receive a radio signal including fourth information/signal through the transceiver 206 and then store in the memory 204 information obtained from signal processing of the fourth information/signal. The memory 204 may be connected to the processor 202 and store various information related to an operation of the processor 202. For example, the memory 204 may store software codes including instructions for performing all or some of processes controlled by the processor 202 or performing the descriptions, functions, procedures, proposals, methods and/or operation flowcharts described in the present disclosure. The processor 202 and the memory 204 may be a part of a communication modem/circuit/chip designated to implement the wireless communication technology (e.g., LTE and NR). The transceiver 206 may be connected to the processor 202 and may transmit and/or receive the radio signals through one or more antennas 208. The transceiver 206 may include a transmitter and/or a receiver, and the transceiver 206 may be used interchangeably with the RF unit. In various embodiments of the present disclosure, the wireless device may mean the communication modem/circuit/chip.

Hardware elements of the wireless devices 100 and 200 are described in more detail below. Although not limited thereto, one or more protocol layers may be implemented by one or more processors 102 and 202. For example, one or more processors 102 and 202 may implement one or more layers (e.g., functional layers such as PHY, MAC, RLC, PDCP, RRC, and SDAP). One or more processors 102 and 202 may generate one or more protocol data units (PDUs) and/or one or more service data units (SDUs) based on the descriptions, functions, procedures, proposals, methods and/or operation flowcharts described in the present disclosure. One or more processors 102 and 202 may generate messages, control information, data, or information based on the descriptions, functions, procedures, proposals, methods and/or operation flowcharts described in the present disclosure. One or more processors 102 and 202 may generate a signal (e.g., a baseband signal) including the PDU, the SDU, the messages, the control information, the data, or the information based on the functions, procedures, proposals and/or methods described in the present disclosure, and provide the generated signal to one or more transceivers 106 and 206. One or more processors 102 and 202 may receive the signal (e.g., baseband signal) from one or more transceivers 106 and 206 and acquire the PDU, the SDU, the messages, the control information, the data, or the information based on the descriptions, functions, procedures, proposals, methods and/or operation flowcharts described in the present disclosure.

One or more processors 102 and 202 may be referred to as a controller, a microcontroller, a microprocessor, or a microcomputer. One or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in one or more processors 102 and 202. The descriptions, functions, procedures, proposals, methods and/or operation flowcharts described in the present disclosure may be implemented using firmware or software, and the firmware or software may be implemented to include modules, procedures, functions, and the like. Firmware or software configured to perform the descriptions, functions, procedures, proposals, methods and/or operation flowcharts described in the present disclosure may be included in one or more processors 102 and 202 or stored in one or more memories 104 and 204 and may be executed by one or more processors 102 and 202. The descriptions, functions, procedures, proposals, methods and/or operation flowcharts described in the present disclosure may be implemented using firmware or software in the form of codes, instructions and/or a set form of instructions.

The one or more memories 104 and 204 may be connected to the one or more processors 102 and 202 and store various types of data, signals, messages, information, programs, codes, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located inside and/or outside the one or more processors 102 and 202. The one or more memories 104 and 204 may be connected to the one or more processors 102 and 202 through various technologies such as wired or wireless connection.

The one or more transceivers 106 and 206 may transmit, to one or more other devices, user data, control information, radio signals/channels, etc. mentioned in the methods and/or operation flowcharts of the present disclosure. The one or more transceivers 106 and 206 may receive, from the one or more other devices, the user data, control information, radio signals/channels, etc. mentioned in the descriptions, functions, procedures, proposals, methods and/or operation flowcharts described in the present disclosure. For example, the one or more transceivers 106 and 206 may be connected to the one or more processors 102 and 202 and transmit and receive radio signals. For example, the one or more processors 102 and 202 may control the one or more transceivers 106 and 206 to transmit the user data, control information, or radio signals to the one or more other devices. The one or more processors 102 and 202 may control the one or more transceivers 106 and 206 to receive the user data, control information, or radio signals from the one or more other devices. The one or more transceivers 106 and 206 may be connected to the one or more antennas 108 and 208, and the one or more transceivers 106 and 206 may be configured to transmit and receive over the one or more antennas 108 and 208 the user data, control information, radio signals/channels, etc. mentioned in the descriptions, functions, procedures, proposals, methods and/or operation flowcharts described in the present disclosure. In the present disclosure, the one or more antennas may be a plurality of physical antennas or a plurality of logical antennas (e.g., antenna ports). The one or more transceivers 106 and 206 may convert the received radio signals/channels etc. from RF band signals to baseband signals in order to process the received user data, control information, radio signals/channels, etc. using the one or more processors 102 and 202. The one or more transceivers 106 and 206 may convert the user data, control information, radio signals/channels, etc. processed using the one or more processors 102 and 202 from the baseband signals to the RF band signals. To this end, the one or more transceivers 106 and 206 may include (analog) oscillators and/or filters.

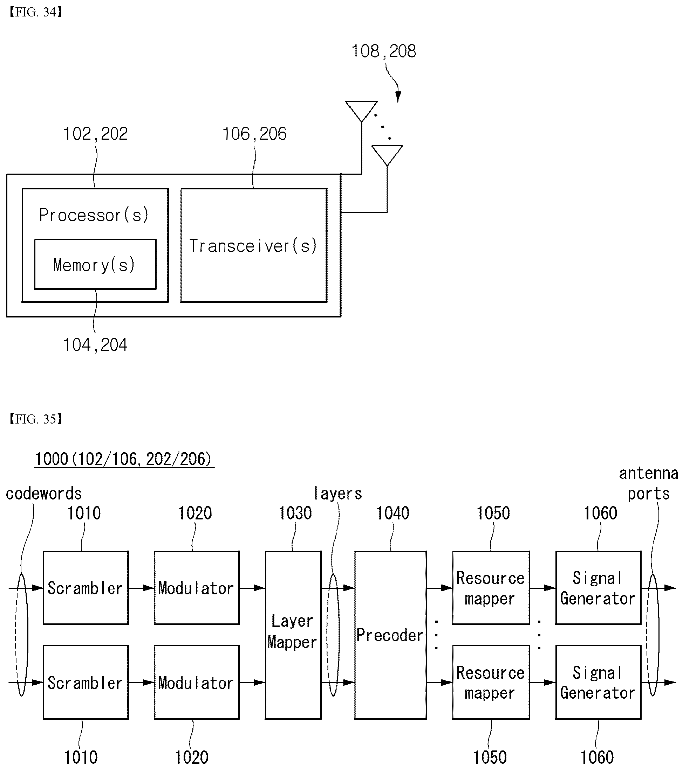

FIG. 34 illustrates another example of a wireless device applicable to various embodiments of the present disclosure.

Referring to FIG. 34, a wireless device may include at least one processor 102 and 202, at least one memory 104 and 204, at least one transceiver 106 and 206, and one or more antennas 108 and 208.

The wireless device illustrated in FIG. 33 is different from the wireless device illustrated in FIG. 34 in that the processors 102 and 202 and the memories 104 and 204 are separated from each other in FIG. 33, and the processors 102 and 202 include the memories 104 and 204 in FIG. 34.

Since the detailed description for the processors 102 and 202, the memories 104 and 204, the transceivers 106 and 206, and the one or more antennas 108 and 208 is the same as that described above, repetitive descriptions are omitted to avoid unnecessary repetition of description.

Examples of a signal processing circuit to which various embodiments of the present disclosure are applied are described below.

FIG. 35 illustrates a signal processing circuit for a transmission signal.

Referring to FIG. 35, a signal processing circuit 1000 may include scramblers 1010, modulators 1020, a layer mapper 1030, a precoder 1040, resource mappers 1050, and signal generators 1060. Although not limited to this, an operation/function of FIG. 35 may be performed by the processors 102 and 202 and/or the transceivers 106 and 206 of FIG. 33. Hardware elements of FIG. 35 may be implemented by the processors 102 and 202 and/or the transceivers 106 and 206 of FIG. 33. For example, blocks 1010 to 1060 may be implemented by the processors 102 and 202 of FIG. 33. Further, the blocks 1010 to 1050 may be implemented by the processors 102 and 202 of FIG. 33, and the block 1060 may be implemented by the transceivers 106 and 206 of FIG. 33.

Codewords may be converted into radio signals via the signal processing circuit 1000 of FIG. 35. The codewords are encoded bit sequences of information blocks. The information blocks may include transport blocks (e.g., a UL-SCH transport block, a DL-SCH transport block). The radio signals may be transmitted via various physical channels (e.g., PUSCH, PDSCH, etc.).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W, where N is the number of antenna ports, and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols, and the generated radio signals may be transmitted to other devices over each antenna. To this end, the signal generators 1060 may include inverse fast Fourier transform (IFFT) modules, cyclic prefix (CP) inserters, digital-to-analog converters (DACs), and frequency up-converters.

Signal processing procedures for a received signal in the wireless device may be configured in a reverse manner of the signal processing procedures 1010 to 1060 of FIG. 35. For example, the wireless devices (e.g., 100 and 200 of FIG. 33) may receive radio signals from the exterior through the antenna ports/transceivers. The received radio signals may be converted into baseband signals through signal restorers. To this end, the signal restorers may include frequency down-converters, analog-to-digital converters (ADCs), CP remover, and fast Fourier transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

Examples of use of a wireless device to which various embodiments of the present disclosure are applied are described below.

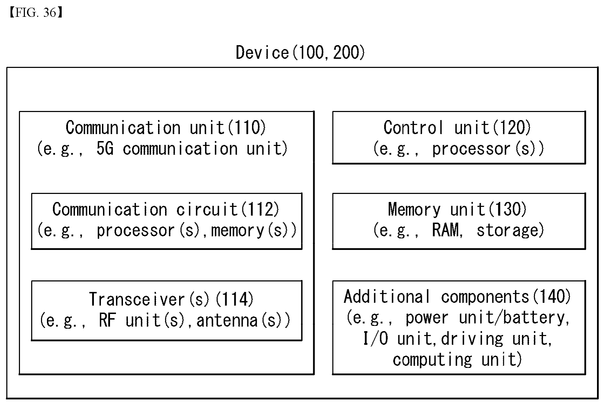

FIG. 36 illustrates another example of a wireless device applied to various embodiments of the present disclosure. The wireless device may be implemented in various forms based on use cases/services (see FIG. 32).

Referring to FIG. 36, wireless devices 100 and 200 may correspond to the wireless devices 100 and 200 of FIG. 33 and may consist of various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 33. For example, the transceiver(s) 114 may include the one or more transceivers 106 and 206 and/or the one or more antennas 108 and 208 of FIG. 33. The control unit 120 is electrically connected to the communication unit 110, the memory 130, and the additional components 140 and controls overall operation of the wireless devices. For example, the control unit 120 may control an electric/mechanical operation of the wireless device based on programs/codes/instructions/information stored in the memory unit 130. The control unit 120 may transmit the information stored in the memory unit 130 to the exterior (e.g., other communication devices) through the communication unit 110 via a wireless/wired interface or store, in the memory unit 130, information received via the wireless/wired interface from the exterior (e.g., other communication devices) through the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of the robot (100a of FIG. 32), the vehicles (100b-1 and 100b-2 of FIG. 32), the XR device (100c of FIG. 32), the hand-held device (100d of FIG. 32), the home appliance (100e of FIG. 32), the IoT device (100f of FIG. 32), a digital broadcast terminal, a hologram device, a public safety device, an MTC device, a medicine device, a fintech device (or a finance device), a security device, a climate/environment device, the AI server/device (400 of FIG. 32), the BSs (200 of FIG. 32), a network node, etc., but is not limited thereto. The wireless device may be used in a mobile or fixed place based on a use-example/service.

In FIG. 36, all the various elements, components, units/parts, and/or modules of the wireless devices 100 and 200 may be connected to each other via wired interfaces or at least a part thereof may be wirelessly connected through the communication unit 110. For example, in each of the wireless devices 100 and 200, the control unit 120 and the communication unit 110 may be connected by wire, and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may consist of a set of one or more processors. As an example, the control unit 120 may include a set of a communication control processor, an application processor, an electronic control unit (ECU), a graphical processing unit, and a memory control processor. As another example, the memory 130 may include a random access memory (RAM), a dynamic RAM (DRAM), a read only memory (ROM)), a flash memory, a volatile memory, a non-volatile memory, and/or a combination thereof.

Examples of implementation of FIG. 36 are described in more detail below.

FIG. 37 illustrates a hand-held device applied to various embodiments of the present disclosure. The hand-held device may include a smartphone, a smartpad, a wearable device (e.g., a smartwatch or a smartglasses), or a portable computer (e.g., a notebook). The mobile device may be referred to as a mobile station (MS), a user terminal (UT), a mobile subscriber station (MSS), a subscriber station (SS), an advanced mobile station (AMS), or a wireless terminal (WT).

Referring to FIG. 37, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 36, respectively.

The communication unit 110 may transmit and receive signals (e.g., data and control signals) to and from other wireless devices or BSs. The control unit 120 may perform various operations by controlling components of the hand-held device 100. The control unit 120 may include an application processor (AP). The memory unit 130 may store data/parameters/programs/codes/instructions needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, for data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

FIG. 38 illustrates a vehicle or an autonomous vehicle applied to various embodiments of the present disclosure.

The vehicle or autonomous vehicle may be implemented by a mobile robot, a car, a train, a manned/unmanned Aerial Vehicle (AV), a ship, etc.

Referring to FIG. 38, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 36, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an electronic control unit (ECU). The driving unit 140a may allow the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a so that the vehicle or the autonomous vehicle 100 moves along the autonomous driving path based on the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transmit information on a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

FIG. 39 illustrates a vehicle applied to various embodiments of the present disclosure. The vehicle may be implemented as a transport means, a train, an aerial vehicle, a ship, etc.

Referring to FIG. 39, a vehicle 100 may include a communication unit 110, a control unit 120, a memory unit 130, an I/O unit 140a, and a positioning unit 140b. The blocks 110 to 130/140a and 140b correspond to blocks 110 to 130/140 of FIG. 36, respectively.

The communication unit 110 may transmit and receive signals (e.g., data and control signals) to and from external devices such as other vehicles or base stations. The control unit 120 may perform various operations by controlling components of the vehicle 100. The memory unit 130 may store data/parameters/programs/codes/instructions for supporting various functions of the vehicle 100. The I/O unit 140a may output an AR/VR object based on information within the memory unit 130. The I/O unit 140a may include an HUD. The positioning unit 140b may acquire location information of the vehicle 100. The location information may include absolute location information of the vehicle 100, location information of the vehicle 100 within a traveling lane, acceleration information, and location information of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain vehicle location information through the GPS and the various sensors and store the obtained information in the memory unit 130. The control unit 120 may generate a virtual object based on the map information, the traffic information, and the vehicle location information, and the I/O unit 140a may display the generated virtual object on a window in the vehicle (1410 and 1420). The control unit 120 may determine whether the vehicle 100 normally drives within a traveling lane, based on the vehicle location information. If the vehicle 100 abnormally exits from the traveling lane, the control unit 120 may display a warning on the window in the vehicle through the I/O unit 140a. In addition, the control unit 120 may broadcast a warning message about driving abnormity to neighboring vehicles through the communication unit 110. According to situations, the control unit 120 may transmit the location information of the vehicle and the information about driving/vehicle abnormality to related organizations through the communication unit 110.

FIG. 40 illustrates an XR device applied to various embodiments of the present disclosure. The XR device may be implemented as an HMD, a head-up display (HUD) mounted in a vehicle, a television, a smartphone, a computer, a wearable device, a home appliance, a digital signage, a vehicle, a robot, etc.

Referring to FIG. 40, an XR device 100a may include a communication unit 110, a control unit 120, a memory unit 130, an I/O unit 140a, a sensor unit 140b, and a power supply unit 140c. The blocks 110 to 130/140a to 140c correspond to the blocks 110 to 130/140 of FIG. 36, respectively.

The communication unit 110 may transmit and receive signals (e.g., media data, control signal, etc.) to and from external devices such as other wireless devices, handheld devices, or media servers. The media data may include video, images, sound, etc. The control unit 120 may control components of the XR device 100a to perform various operations. For example, the control unit 120 may be configured to control and/or perform procedures such as video/image acquisition, (video/image) encoding, and metadata generation and processing. The memory unit 120 may store data/parameters/programs/codes/instructions required to drive the XR device 100a/generate an XR object. The I/O unit 140a may obtain control information, data, etc. from the outside and output the generated XR object. The I/O unit 140a may include a camera, a microphone, a user input unit, a display, a speaker, and/or a haptic module. The sensor unit 140b may obtain a state, surrounding environment information, user information, etc. of the XR device 100a. The sensor 140b may include a proximity sensor, an illumination sensor, an acceleration sensor, a magnetic sensor, a gyro sensor, an inertial sensor, an RGB sensor, an IR sensor, a fingerprint scan sensor, an ultrasonic sensor, a light sensor, a microphone, and/or a radar. The power supply unit 140c may supply power to the XR device 100a and include a wired/wireless charging circuit, a battery, etc.

For example, the memory unit 130 of the XR device 100a may include information (e.g., data) required to generate the XR object (e.g., an AR/VR/MR object). The I/O unit 140a may obtain instructions for manipulating the XR device 100a from a user, and the control unit 120 may drive the XR device 100a based on a driving instruction of the user. For example, if the user desires to watch a film, news, etc. through the XR device 100a, the control unit 120 may transmit content request information to another device (e.g., a handheld device 100b) or a media server through the communication unit 110. The communication unit 110 may download/stream content such as films and news from another device (e.g., the handheld device 100b) or the media server to the memory unit 130. The control unit 120 may control and/or perform procedures, such as video/image acquisition,

(video/image) encoding, and metadata generation/processing, for the content and generate/output the XR object based on information about a surrounding space or a real object obtained through the I/O unit 140a/sensor unit 140b.

The XR device 100a may be wirelessly connected to the handheld device 100b through the communication unit 110, and the operation of the XR device 100a may be controlled by the handheld device 100b. For example, the handheld device 100b may operate as a controller of the XR device 100a. To this end, the XR device 100a may obtain 3D location information of the handheld device 100b and generate and output an XR object corresponding to the handheld device 100b.

FIG. 41 illustrates a robot applied to various embodiments of the present disclosure. The robot may be categorized into an industrial robot, a medical robot, a household robot, a military robot, etc., based on a used purpose or field.

Referring to FIG. 41, a robot 100 may include a communication unit 110, a control unit 120, a memory unit 130, an I/O unit 140a, a sensor unit 140b, and a power supply unit 140c. The blocks 110 to 130/140a to 140c correspond to the blocks 110 to 130/140 of FIG. 36, respectively.

The communication unit 110 may transmit and receive signals (e.g., driving information and control signals) to and from external devices such as other wireless devices, other robots, or control servers. The control unit 120 may perform various operations by controlling components of the robot 100. The memory unit 130 may store data/parameters/programs/codes/instructions for supporting various functions of the robot 100. The I/O unit 140a may obtain information from the outside of the robot 100 and output information to the outside of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may allow the robot 100 to travel on the road or to fly. The driving unit 140c may include an actuator, a motor, a wheel, a brake, a propeller, etc.

FIG. 42 illustrates an AI device applied to various embodiments of the present disclosure.

The AI device may be implemented as a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 42, an AI device 100 may include a communication unit 110, a control unit 120, a memory unit 130, an input unit 140a, an out unit 140b, a learning processor unit 140c, and a sensor unit 140d. The blocks 110 to 130/140a to 140d correspond to the blocks 110 to 130/140 of FIG. 36, respectively.

The communication unit 110 may transmit and receive wired/radio signals (e.g., sensor information, user input, learning models, or control signals) to and from external devices such as other AI devices (e.g., 100x, 200, or 400 of FIG. 32) or an AI server 200 using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling components of the AI device 100. For example, the control unit 120 may request, search, receive, or use data of the learning processor unit 140c or the memory unit 130 and control the components of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 32). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 32). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

**Claims**

1. An operating method of a first node in a communication system, comprising:

   receiving one or more synchronization signals from a second node;
   receiving system information from the second node;
   transmitting a random access preamble to the second node;
   receiving a random access response from the second node;
   receiving a request for capability information of the first node from the second node;
   transmitting the capability information to the second node;
   receiving, from the second node, configuration information for constructing a relation between a background knowledge graph and a semantic representation vector based on the capability information, wherein the configuration information includes information about a second number that is a reference size of the background knowledge graph; and
   performing construction of the relation through connections of edges between the semantic representation vector and first node vectors in the background knowledge graph based on the configuration information and a first number of nodes by which the first node configures the background knowledge graph,
   wherein the first node vectors include a selected few of second node vectors configuring the background knowledge graph.

2. The method of claim 1, wherein

when the first number is smaller than the second number,
the first node vectors include, among the second node vectors of which angles formed with the semantic representation vector are less than a set first angle, a third number of second node vectors according to an order in which an angle formed with the semantic representation vector is small.

3. The method of claim 2, wherein

an angle formed by each of the second node vectors and the semantic representation vector
is related to a similarity between each of the second node vectors and the semantic representation vector.

4. The method of claim 1, wherein
a corresponding weight of weights determined based on an angle between each of the first node vectors and the semantic representation vector is applied to each of the edges.

5. The method of claim 4, wherein
a sum of the weights applied to the respective first node vectors is set to 1.

6. The method of claim 2, wherein when the first number is equal to or larger than the second number,
the first node vectors include second node vectors of a sixth number or less in which angles forming a set are less than a set second angle among second node vectors corresponding to hops of a fifth number or less from a fourth number of sets having a high score among sets of edges formed by two of the second node vectors based on a score function.

7. The method of claim 6, wherein

when the first number is smaller than the second number, the first angle is a maximum angle among the angles formed by the first node vectors and the semantic representation vector,
wherein when the first number is equal to or larger than the second number, the second angle is the maximum angle among the angles formed by the first node vectors and the semantic representation vector, and
wherein the second angle is smaller than the first angle.

8. An operating method of a second node in a communication system, comprising:

transmitting one or more synchronization signals to a first node;
transmitting system information to the first node;
receiving a random access preamble from the first node;
transmitting a random access response to the first node;
transmitting a request for capability information of the first node to the second node;
receiving the capability information from the first node; and
transmitting, to the first node, configuration information for constructing a relation between the background knowledge graph and a semantic representation vector based on the capability information,
wherein the configuration information includes information of a second number which is a reference size of a background knowledge graph,
wherein the relation between the background knowledge graph and the semantic representation vector is constructed through connections of edges between the semantic representation vector and first node vectors in the background knowledge graph based on the configuration information and a first number of nodes that configure the background knowledge graph related to the first node, and
wherein the first node vectors include a selected few of second node vectors configuring the background knowledge graph.

9. The method of claim 8, wherein when the first number is smaller than the second number,
the first node vectors include, among the second node vectors of which angle formed with the semantic representation vector are less than a set first angle, a third number of second node vectors according to an order in which an angle formed with the semantic representation vector is small.

10. The method of claim 9, wherein
an angle formed by each of the second node vectors and the semantic representation vector is related to a similarity between each of the second node vectors and the semantic representation vector.

**11.** The method of claim 8, wherein
a corresponding weight of weights determined based on an angle between each of the first node vectors and the semantic representation vector is applied to each of the edges.

**12.** The method of claim 11, wherein
a sum of the weights applied to the respective first node vectors is set to 1.

**13.** The method of claim 9, wherein

when the first number is equal to or larger than the second number,
the first node vectors include second node vectors of a sixth number or less in which angles forming a set are less than a set second angle among second node vectors corresponding to hops of a fifth number or less from a fourth number of sets having a high score among sets of edges formed by two of the second node vectors based on a score function.

**14.** The method of claim 13, wherein

when the first number is smaller than the second number, the first angle is a maximum angle among the angles formed by the first node vectors and the semantic representation vector,
wherein when the first number is equal to or larger than the second number, the second angle is the maximum angle among the angles formed by the first node vectors and the semantic representation vector, and
wherein the second angle is smaller than the first angle.

**15.** A first node in a communication system, the first node comprising:

a transceiver; and
at least one processor,
wherein the at least one processor is configured to:

receive one or more synchronization signals from a second node;
receive system information from the second node;
transmit a random access preamble to the second node;
receive a random access response from the second node;
receive a request for capability information of the first node from the second node;
transmit the capability information to the second node;
receive, from the second node, configuration information for constructing a relation between a background knowledge graph and a semantic representation vector based on the capability information, wherein the configuration information includes information about a second number that is a reference size of the background knowledge graph; and
perform construction of the relation through connections of edges between the semantic representation vector and first node vectors in the background knowledge graph based on the configuration information and a first number of nodes by which the first node configures the background knowledge graph,
wherein the first node vectors include a selected few of second node vectors configuring the background knowledge graph.

**16.** A second node in a communication system, the second node comprising:

a transceiver; and
at least one processor,
wherein the at least one processor is configured to:

transmit one or more synchronization signals to a first node;
transmit system information to the first node;
receive a random access preamble from the first node;
transmit a random access response to the first node;
transmit a request for capability information of the first node to the second node;

receive the capability information from the first node; and

transmit, to the first node, configuration information for constructing a relation between the background knowledge graph and a semantic representation vector based on the capability information,

wherein the configuration information includes information of a second number which is a reference size of a background knowledge graph,

wherein the relation between the background knowledge graph and the semantic representation vector is constructed through connections of edges between the semantic representation vector and first node vectors in the background knowledge graph based on the configuration information and a first number of nodes that configure the background knowledge graph related to the first node, and

wherein the first node vectors include a selected few of second node vectors configuring the background knowledge graph.

17. A control device controlling a first node in a communication system, the control device comprising:

at least one processor; and
at least one memory operably connected to the at least one processor,
wherein the at least one memory stores instructions performing operations based on being executed by the at least one processor,
wherein the operations comprise:

receiving one or more synchronization signals from a second node;
receiving system information from the second node;
transmitting a random access preamble to the second node;
receiving a random access response from the second node;
receiving a request for capability information of the first node from the second node;
transmitting the capability information to the second node;
receiving, from the second node, configuration information for constructing a relation between a background knowledge graph and a semantic representation vector based on the capability information, wherein the configuration information includes information about a second number that is a reference size of the background knowledge graph; and
performing construction of the relation through connections of edges between the semantic representation vector and first node vectors in the background knowledge graph based on the configuration information and a first number of nodes by which the first node configures the background knowledge graph,
wherein the first node vectors include a selected few of second node vectors configuring the background knowledge graph.

18. A control device controlling a second node in a communication system, the control device comprising:

at least one processor; and
at least one memory operably connected to the at least one processor,
wherein the at least one memory stores instructions performing operations based on being executed by the at least one processor,
wherein the operations comprise:

transmitting one or more synchronization signals to a first node;
transmitting system information to the first node;
receiving a random access preamble from the first node;
transmitting a random access response to the first node;
transmitting a request for capability information of the first node to the second node;
receiving the capability information from the first node; and
transmitting, to the first node, configuration information for constructing a relation between the background knowledge graph and a semantic representation vector based on the capability information,
wherein the configuration information includes information of a second number which is a reference size of a background knowledge graph,
wherein the relation between the background knowledge graph and the semantic representation vector is constructed through connections of edges between the semantic representation vector and first node vectors in the background knowledge graph based on the configuration information and a first number of nodes that configure the background knowledge graph related to the first node, and

wherein the first node vectors include a selected few of second node vectors configuring the background knowledge graph.

**19.** One or more non-transitory computer readable mediums storing one or more instructions,

wherein the one or more instructions perform operations based on being executed by one or more processors, wherein the operations comprise:

receiving one or more synchronization signals from a second node;
receiving system information from the second node;
transmitting a random access preamble to the second node;
receiving a random access response from the second node;
receiving a request for capability information of the first node from the second node;
transmitting the capability information to the second node;
receiving, from the second node, configuration information for constructing a relation between a background knowledge graph and a semantic representation vector based on the capability information, wherein the configuration information includes information about a second number that is a reference size of the background knowledge graph; and
performing construction of the relation through connections of edges between the semantic representation vector and first node vectors in the background knowledge graph based on the configuration information and a first number of nodes by which the first node configures the background knowledge graph,
wherein the first node vectors include a selected few of second node vectors configuring the background knowledge graph.

**20.** One or more non-transitory computer readable mediums storing one or more instructions,

wherein the one or more instructions perform operations based on being executed by one or more processors, wherein the operations comprise:

transmitting one or more synchronization signals to a first node;
transmitting system information to the first node;
receiving a random access preamble from the first node;
transmitting a random access response to the first node;
transmitting a request for capability information of the first node to the second node;
receiving the capability information from the first node; and
transmitting, to the first node, configuration information for constructing a relation between the background knowledge graph and a semantic representation vector based on the capability information,
wherein the configuration information includes information of a second number which is a reference size of a background knowledge graph,
wherein the relation between the background knowledge graph and the semantic representation vector is constructed through connections of edges between the semantic representation vector and first node vectors in the background knowledge graph based on the configuration information and a first number of nodes that configure the background knowledge graph related to the first node, and
wherein the first node vectors include a selected few of second node vectors configuring the background knowledge graph.

【FIG. 1】

INITIAL CELL
SEARCH

SYSTEM
INFORMATION
RECEPTION

RANDOM ACCESS PROCEDURE

GENERAL DL/UL Tx/Rx

PSS-SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S11

S12

S13

S14

S15

S16

S17

S18

· DL/UL ACK/NACK
· UE CQI/PMI RI REPORT
  USING PUSCH AND PUCCH

【FIG. 2】

【FIG. 3】

| gNB | AMF | SMF |
|---|---|---|
| Inter Cell RRM | NAS security | UE IP address allocation |
| RB control | Idle state Mobility processing | PDU session control |
| Connection mobility control | | |
| Radio admission control | | |
| Measurement configuration and provision | UPF | |
| Dynamic resource allocation (scheduler) | Mobility anchoring | |
| | PDU processing | |

NG-RAN      5GC    Internet

【FIG. 4】

RB control

Transmission in gigabits per second

Artificial Intelligence (AI)
(e.g. big data)

Smart home/building

3D video (4K screen)

Work/play in cloud

Augmented Reality (AR)/Virtual
Reality (VR)/Mixed Reality (MR)

Industrial automation
(e.g. robots)

Smart networks
(e.g. smart cities)

Mission-critical applications
(e.g. healthcare)

Autonomous vehicle

Massive MTC
(mMTC)

Edge computing

Ultra-reliable/low latency
communications
(URLLC)

[ FIG. 5]

【FIG. 6】

【FIG. 7】

【FIG. 8】

【FIG. 9】

Input layer    Hidden layer    Output layer

Input-Hidden
weight
$W^{h \times w \times h \times w}$

Hidden-Output
weight
$W^{h \times w \times h \times w}$

【FIG. 10】

$3 \times 3$
Filter

$W^{3 \times 3}$

Weight
multiplication

Sum

Activation
function

【FIG. 11】

Output
layer

Hidden-Output
weight
$W^{H \times K}$

Hidden
layer

Input-Hidden
weight
$W^{d \times H}, W^{H \times H}$

Input
layer

**【 FIG. 12 】**

| Time point | Input sequence |
|---|---|
| 1 | $(x_1^{(1)}, x_2^{(1)} \cdots, x_d^{(1)})$ |
| 2 | $(x_1^{(2)}, x_2^{(2)} \cdots, x_d^{(2)})$ |
| 3 | $(x_1^{(3)}, x_2^{(3)} \cdots, x_d^{(3)})$ |
| $t$ | $(x_1^{(t)}, x_2^{(t)} \cdots, x_d^{(t)})$ |
| $T$ | $(x_1^{(T)}, x_2^{(T)} \cdots, x_d^{(T)})$ |

Time point 1          Time point 2          Time point 3

【FIG. 13】

【FIG. 14】

【FIG. 15】

【FIG. 16】

【FIG. 17】

(a) Original

(b) Crop and resize

(c) Crop, resize (ans flip)

(d) Color distort (drop)

(e) Color distort (jitter)

(f) Rotate {90°, 180°, 270°}

(g) Cutout

(h) Gaussian noise

(i) Gaussian blur

(j)Sobel filtering

【FIG. 18】

Positive Pair: (     )~P$_{pos}$

$x$     $y$

Alignment:Similar samples have similar features

Feature Density

Uniformity:Preserve maximal information

【FIG. 19】

(a) complete collapse　　(b) dimensional collapse　　(c) decorrelated

【FIG. 20】

Isotropy

Anisotropy

【FIG. 21】

[FIG. 22]

Device                                    Base station

Application
of power

Synchronization

UE Capability Enquiry

UE Capability Information
(Generatable, collectable, and
processible raw data type, computation
capability value of device, etc.)

OPT) When semantic communication is
enabled to be performed

Indicator
DCI or MAC CE or RRC message

Storing received relation
construction related
information

- Background knowledge size reference M
- When number of background knowledge
  nodes < M
  > DDegree limit reference $\theta_M$
  > Maximum connection number limit $K_M$

- When number of background knowledge
  nodes ≥ M
  > Source function and top-L score
    selection related L
  > Maximum number of newly added semantic
    representation vectors srVectorMaxCnt
  > Maximum number of hops from
    <Node x, edge, node y> set H
  > Degree limit reference $\theta_L$
  > Maximum connection number limit $K_L$
- Edge weight normalization function

OPT) When receiving semantic
representation vector

Constructing relation between Background
knowledge graph and semantic
representation vector

【FIG. 23】

【FIG. 24】

Table 1: Popular Heuristics for Link Prediction

| Name | Formula | Order |
|---|---|---|
| common neighbors | $\| \Gamma(x) \cap \Gamma(y) \|$ | first |
| Jaccard | $\dfrac{\| \Gamma(x) \cap \Gamma(y) \|}{\| \Gamma(x) \cap \Gamma(y) \|}$ | first |
| preferential attachment | $\| \Gamma(x) \| \cdot \| \Gamma(y) \|$ | first |
| Adamic-Adar | $\sum_{z \in \Gamma(x) \cap \Gamma(y)} \dfrac{1}{\log \| \Gamma(z) \|}$ | second |
| resource allocation | $\sum_{z \in \Gamma(x) \cap \Gamma(y)} \dfrac{1}{\| \Gamma(z) \|}$ | second |
| Katz | $\sum_{l=1}^{\infty} \beta^{l} \| \text{path}(x,y)=l \|$ | high |
| PageRank | $q_{xy} + q_{yx}$ | high |
| SimRank | $\gamma \dfrac{\sum_{a \in \Gamma(x)} \sum_{b \in \Gamma(y)} \text{score}(a,b)}{\| \Gamma(x) \| \cdot \| \Gamma(y) \|}$ | high |
| resistance distance | $\dfrac{1}{l_{xx}^{+} + l_{yy}^{+} - 2l_{xy}^{+}}$ | high |

Notes: $\Gamma(x)$ denotes the neighbor set of vertex x. $\| \text{path}(x,y)=l \|$ counts the number of length-$l$ paths between x and y. $q_{xy}$ is the stationary distribution probability of y under the random walk from x with restart, see [10]. SimRank score is a recursive definition. $l_{xy}^{+}$ is the (x,y) entry of the pseudoinverse of the graph's Laplacian matrix.

【FIG. 25】

【FIG. 26】

【FIG. 27】

【FIG. 28】

【FIG. 29】

【FIG. 30】

```
                        ( Start )
                            │
                            ▼
┌─────────────────────────────────────────────────┐
│   Receive request for capability information of  │──── S3001
│        first node from second node               │
└─────────────────────────────────────────────────┘
                            │
                            ▼
┌─────────────────────────────────────────────────┐
│   Transmit capability information to second node │──── S3002
└─────────────────────────────────────────────────┘
                            │
                            ▼
┌─────────────────────────────────────────────────┐
│  Receive, from second node, configuration        │
│  information for constructing relation between    │
│  background knowledge graph Receive, from         │──── S3003
│  second node, configuration information for       │
│  constructing relation between background         │
│  knowledge graph                                  │
└─────────────────────────────────────────────────┘
                            │
                            ▼
┌─────────────────────────────────────────────────┐
│  Perform construction of relation through        │
│  connections of edges between semantic            │
│  representation vector and first node vectors     │
│  in background knowledge graph based on           │──── S3004
│  configuration information and first number       │
│  of nodes by which first node configures          │
│  background knowledge graph                       │
└─────────────────────────────────────────────────┘
                            │
                            ▼
                        ( End )
```

【FIG. 31】

```
                    ( Start )
                        │
                        ▼
┌──────────────────────────────────────────────┐
│  Transmit request for capability information of│──── S3101
│        first node to first node                │
└──────────────────────────────────────────────┘
                        │
                        ▼
┌──────────────────────────────────────────────┐
│  Receive capability information from first node│──── S3102
└──────────────────────────────────────────────┘
                        │
                        ▼
┌──────────────────────────────────────────────┐
│ Transmit, to first node, configuration information│
│    for constructing relation between background    │──── S3103
│ knowledge graph and semantic representation vector│
│         based on capability information            │
└──────────────────────────────────────────────┘
                        │
                        ▼
                    ( End )
```

【FIG. 32】

【FIG. 33】

【FIG. 34】

108,208

102,202          106,206

Processor(s)

Memory(s)          Transceiver(s)

104,204

【FIG. 35】

1000 (102/106, 202/206)

codewords

layers          antenna ports

1010     1020     1030     1040     1050     1060

Scrambler → Modulator → Layer Mapper → Precoder → Resource mapper → Signal Generator

Scrambler → Modulator          Resource mapper → Signal Generator

1010     1020          1050     1060

【FIG. 36】

Device(100, 200)

| Communication unit(110)<br>(e.g., 5G communication unit) | Control unit(120)<br>(e.g., processor(s)) |
|---|---|
| Communication circuit(112)<br>(e.g., processor(s),memory(s)) | Memory unit(130)<br>(e.g., RAM, storage) |
| Transceiver(s)(114)<br>(e.g., RF unit(s),antenna(s)) | Additional components(140)<br>(e.g., power unit/battery,<br>I/O unit,driving unit,<br>computing unit) |

【FIG. 37】

【FIG. 38】

| Car or autonomous vehicle (100) | | Device (100, 200) |
|---|---|---|
| Communication unit (110) | | Communication unit (210) |
| Control unit (120) | 108    208 | Control unit (220) |
| Memory unit (130) | | Memory unit (230) |
| Driving unit (140a) | | Driving unit (140a) |
| Power supply unit (140b) | | Power supply unit (140b) |
| Sensor unit (140c) | | Sensor unit (140c) |
| Autonomous driving unit (140d) | | Autonomous driving unit (140d) |

【FIG. 39】

【FIG. 40】

【FIG. 41】

Robot(100)

Communication unit(110)

Control unit(120)

Memory unit(130)

I/O unit(140a)

Sebsor unit(140b)

Driving unit(140c)

【FIG. 42】

## INTERNATIONAL SEARCH REPORT

<table>
<tr><td colspan="2">International application No.</td></tr>
<tr><td colspan="2"><strong>PCT/KR2023/001765</strong></td></tr>
</table>

**A.    CLASSIFICATION OF SUBJECT MATTER**

**G06N 3/042**(2023.01)i; **G06N 3/08**(2006.01)i; **H04W 8/24**(2009.01)i; **H04W 74/08**(2009.01)i

According to International Patent Classification (IPC) or to both national classification and IPC

**B.    FIELDS SEARCHED**

Minimum documentation searched (classification system followed by classification symbols)

G06N 3/042(2023.01); G06F 40/126(2020.01); G06F 40/237(2020.01); G06F 40/30(2020.01); G06K 9/34(2006.01); G06K 9/72(2006.01); H04B 7/04(2006.01); H04B 7/0404(2017.01); H04B 7/06(2006.01); H04L 27/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 의미 표현 벡터(semantic representation vector), 배경 지식 그래프(background knowledge graph), 동기 신호(synchronization signal), 랜덤 액세스(random access), 시맨틱 통신(semantic communication)

**C.    DOCUMENTS CONSIDERED TO BE RELEVANT**

| Category* | Citation of document, with indication, where appropriate, of the relevant passages | Relevant to claim No. |
|---|---|---|
| A | KR 10-1895713 B1 (CHUNG ANG UNIVERSITY INDUSTRY ACADEMIC COOPERATION FOUNDATION) 18 October 2018 (2018-10-18)<br>See paragraphs [0007]-[0010]. | 1-20 |
| A | KR 10-2022-0039576 A (BEIJING BAIDU NETCOM SCIENCE AND TECHNOLOGY CO., LTD.) 29 March 2022 (2022-03-29)<br>See paragraphs [0028]-[0088]. | 1-20 |
| A | US 2021-0209401 A1 (BEIJING BAIDU NETCOM SCIENCE AND TECHNOLOGY CO., LTD.) 08 July 2021 (2021-07-08)<br>See claims 1 and 6. | 1-20 |
| A | KR 10-1468226 B1 (LG ELECTRONICS INC.) 04 December 2014 (2014-12-04)<br>See paragraphs [0018]-[0069]. | 1-20 |

☑ Further documents are listed in the continuation of Box C.          ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **25 October 2023** | **25 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/001765** |

**C.      DOCUMENTS CONSIDERED TO BE RELEVANT**

| Category* | Citation of document, with indication, where appropriate, of the relevant passages | Relevant to claim No. |
| --- | --- | --- |
| A | KR 10-2427368 B1 (KOREA INSTITUTE OF SCIENCE & TECHNOLOGY INFORMATION) 01 August 2022 (2022-08-01)<br>     See paragraphs [0035]-[0082]. | 1-20 |

Form PCT/ISA/210 (second sheet) (July 2022)

## INTERNATIONAL SEARCH REPORT
### Information on patent family members

| | International application No. |
|---|---|
| | **PCT/KR2023/001765** |

| Patent document cited in search report | | | Publication date (day/month/year) | Patent family member(s) | | | Publication date (day/month/year) |
|---|---|---|---|---|---|---|---|
| KR | 10-1895713 | B1 | 18 October 2018 | None | | | |
| KR | 10-2022-0039576 | A | 29 March 2022 | CN | 112148871 | A | 29 December 2020 |
| | | | | EP | 3971761 | A1 | 23 March 2022 |
| | | | | JP | 2022-051666 | A | 01 April 2022 |
| | | | | JP | 7178441 | B2 | 25 November 2022 |
| | | | | US | 2022-0092252 | A1 | 24 March 2022 |
| US | 2021-0209401 | A1 | 08 July 2021 | CN | 111091106 | A | 01 May 2020 |
| | | | | CN | 113045570 | A | 29 June 2021 |
| KR | 10-1468226 | B1 | 04 December 2014 | US | 2011-0019694 | A1 | 27 January 2011 |
| | | | | US | 8493924 | B2 | 23 July 2013 |
| | | | | WO | 2009-116819 | A2 | 24 September 2009 |
| | | | | WO | 2009-116819 | A3 | 17 December 2009 |
| KR | 10-2427368 | B1 | 01 August 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. XIE ; Z. QIN ; G. Y. LI ; B.-H. JUANG**. Deep learning enabled semantic communication systems. *IEEE Trans. Signal Proc.*, 2021, vol. 69
- **Y. XIAO ; Y. LI ; G. SHI ; H. V. POOR**. Reasoning on the Air: An Implicit Semantic Communication Architecture. *IEEE International Conference on Communications Workshops (ICC Workshops)*, 2022, 289-294
- **SHANNON, C. E.** A mathematical theory of communication.. *Bell System Technical Journal*, 1948, vol. 27, 379-423, 625-56
- **WEAVER, W.** The Mathematical Theory of Communication.. *Recent Contributions to the Mathematical Theory of Communication).*, 1949